(19) Europäisches Patentamt
European Patent Office
Office européen des brevets

(11) EP 4 546 539 A1

(12) EUROPEAN PATENT APPLICATION
published in accordance with Art. 153(4) EPC

(43) Date of publication:
**30.04.2025 Bulletin 2025/18**

(21) Application number: **22967455.1**

(22) Date of filing: **05.12.2022**

(51) International Patent Classification (IPC):
***H01M 50/409*** *(2021.01)* ***H01M 50/40*** *(2021.01)*
***H01M 50/403*** *(2021.01)*

(52) Cooperative Patent Classification (CPC):
**H01M 50/40; H01M 50/403; H01M 50/409**

(86) International application number:
**PCT/CN2022/136428**

(87) International publication number:
**WO 2024/119287 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **WEI, Manxiang**
  **Ningde City, Fujian 352100 (CN)**
- **YANG, Jianrui**
  **Ningde City, Fujian 352100 (CN)**
- **XU, Ming**
  **Ningde City, Fujian 352100 (CN)**
- **XIAO, Zhiwei**
  **Ningde City, Fujian 352100 (CN)**

(74) Representative: **Kraus & Lederer PartGmbB**
**Thomas-Wimmer-Ring 15**
**80539 München (DE)**

# (54) SEPARATOR, PREPARATION METHOD THEREFOR, AND SECONDARY BATTERY AND ELECTRIC DEVICE RELATED THERETO

(57) This application provides a separator, a preparation method thereof, and a secondary battery and an electric apparatus related thereto. The separator includes a substrate and a coating disposed on at least one surface of the substrate. The coating includes organosilicon particles, where a particle size by volume $D_v90$ of the organosilicon particles satisfies $0 < D_v90 \leq 3.0$ μm. By using organosilicon particles with the above particle size, this application is conducive to obtaining a separator with a relatively small thickness. Additionally, because the coating has good heat resistance and stability, the separator can effectively isolate positive and negative electrodes of the secondary battery, thereby improving the safety performance of the secondary battery.

5

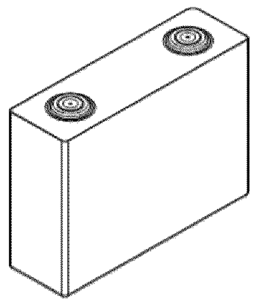

FIG. 1

5

EP 4 546 539 A1

## Description

### TECHNICAL FIELD

This application relates to the field of batteries, and specifically, to a separator, a preparation method thereof, and a secondary battery and an electric apparatus related thereto.

### BACKGROUND

Secondary batteries have characteristics such as high capacity and long service life, and thus are widely used in electronic devices such as mobile phones, laptop computers, electric bicycles, electric vehicles, electric aircrafts, electric ships, electric toy cars, electric toy ships, electric toy aircrafts, and electric tools.

As the application range of batteries becomes increasingly extensive, the performance requirements for secondary batteries are also becoming more stringent, especially the safety performance of secondary batteries. How the safety performance of batteries during use is further improved remains one of the issues to be addressed by persons skilled in the art.

### SUMMARY

This application is made in view of the above issues, aiming to provide a separator, a preparation method thereof, and a secondary battery and an electric apparatus related thereto.

According to a first aspect, this application provides a separator. The separator includes a substrate and a coating disposed on at least one surface of the substrate. The coating includes organosilicon particles, where a particle size by volume $D_v90$ of the organosilicon particles satisfies $0 < D_v90 \leq 3.0\ \mu m$.

In some embodiments, $0.1\ \mu m \leq D_v90 \leq 2.0\ \mu m$.

Thus, in this application, when $0 < D_v90 \leq 3.0\ \mu m$, especially when $0.1\ \mu m \leq D_v90 \leq 2.0\ \mu m$, the particle size of the organosilicon particles is less than or equal to the thickness of the coating, which is conducive to forming a thinner coating, thereby obtaining a separator with a smaller overall thickness; and because the coating has good heat resistance and stability, the separator can effectively isolate positive and negative electrodes of the secondary battery, thereby improving the safety performance of the secondary battery.

In some embodiments, a particle size distribution of the organosilicon particles satisfies $(D_v90-D_v10)/D_v50 \leq 2.0$, optionally $0.1 \leq (D_v90-D_v10)/D_v50 \leq 1.0$.

Thus, when the particle size distribution of the organosilicon particles satisfies the above range, the particle size distribution of the organosilicon particles is relatively uniform, which is conducive to uniform dispersion of the organosilicon particles in the coating, forming a coating with a relatively uniform thickness.

In some embodiments, a particle size by volume $D_v50$ of the organosilicon particles satisfies $0.01\ \mu m \leq D_v50 \leq 2\ \mu m$.

Thus, in this application, when the particle size by volume $D_v50$ of the organosilicon particles satisfies $0.01\ \mu m \leq D_v50 \leq 2\ \mu m$, it can meet the requirement for forming a thinner coating on the separator, while the particle size allows the organosilicon particles in the coating to form tight overlap, so that when the separator is heated, the organosilicon particles quickly contact and compress each other, providing tensile force to the substrate and reducing the risk of substrate shrinkage, thereby ensuring effective isolation between the positive and negative electrodes by the separator and improving the safety performance of the secondary battery.

In some embodiments, a specific surface area SSA of the organosilicon particles is $2.0\ cm^2/g$ to $50\ cm^2/g$, optionally $8.5\ cm^2/g$ to $20.5\ cm^2/g$.

Thus, when the specific surface area SSA of the organosilicon particles is within the above range, the specific surface area SSA of the organosilicon particles is relatively large, which is conducive to good overlap between the particles, making it easier for the organosilicon particles to form a porous structure, thereby promoting migration of active ions.

In some embodiments, the organosilicon particles include primary particles. A relatively small particle size of the primary particles facilitates uniform dispersion of the organosilicon particles when the organosilicon particles are applied to the coating, allowing for a more uniform performance of the formed film layer.

In some embodiments, the organosilicon particles have at least one of spherical, spheroidal, cubic, rhombohedral, fibrous, tubular, rod-like, and flaky morphologies. The organosilicon particles can be arranged irregularly, which is conducive to better overlap between the particles, increasing contact points between the particles, thereby improving the overall shrinkage resistance of the coating and making the overall structure of the separator more stable.

In some embodiments, the organosilicon particles include a first polymer. The first polymer includes a first structural unit, a second structural unit, and a third structural unit. The first structural unit includes a structural unit

represented by formula (I):

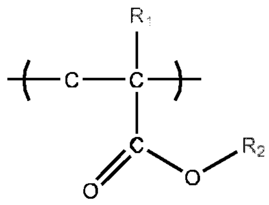

formula (I);

where in formula (I),

$R_1$ includes one or more of hydrogen atom and substituted or unsubstituted C1-C5 alkyl, and optionally $R_1$ includes one or more of hydrogen atom and substituted or unsubstituted C1-C3 alkyl; and $R_2$ includes one or more of substituted or unsubstituted C1-C20 alkyl, substituted or unsubstituted C3-C20 cycloalkyl, and substituted or unsubstituted C1-C20 hydroxyalkyl, and optionally $R_2$ includes one or more of C1-C12 alkyl, C3-C12 cycloalkyl, and C1-C12 hydroxyalkyl.

The second structural unit includes a structural unit represented by formula (II):

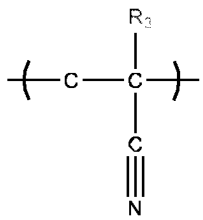

formula (II);

where in formula (II), $R_3$ includes one or more of hydrogen atom and substituted or unsubstituted C1-C5 alkyl, and optionally $R_3$ includes one or more of hydrogen atom and substituted or unsubstituted C1-C3 alkyl.

The third structural unit includes a structural unit represented by formula (III):

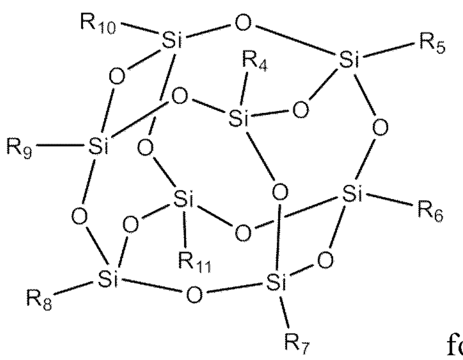

formula (III);

where in formula (III), $R_4$ to $R_{11}$ each independently include one or more of substituted or unsubstituted C1-C10 alkyl and a structural unit represented by formula (III-1), and at least one of $R_4$ to $R_{11}$ includes a structural unit represented by formula (III-1):

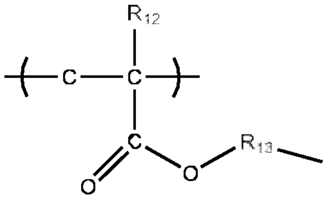

formula (III-1);

where in formula (III-1), $R_{12}$ includes one or more of hydrogen atom and substituted or unsubstituted C1-C5 alkyl, and optionally, $R_{12}$ includes one or more of hydrogen atom and substituted or unsubstituted C1-C3 alkyl; and $R_{13}$ includes substituted or unsubstituted C1-C10 alkyl, and optionally, $R_{13}$ includes substituted or unsubstituted C3-C10 alkyl.

In some embodiments, the organosilicon particles include a second polymer. The second polymer includes a structural unit represented by formula (a):

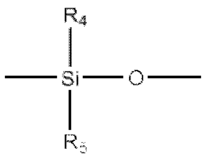 formula (a);

where in formula (a), $R_{14}$ and $R_{15}$ each independently include one or more of substituted or unsubstituted C1-C10 alkyl, hydroxy, or amino; and optionally, $R_{14}$ and $R_{15}$ each independently include one or more of substituted or unsubstituted C1-C6 alkyl, hydroxy, or amino.

Optionally, the second polymer includes one or more of polymethylsiloxane, polydimethylsiloxane, polydiethylsiloxane, polymethylhydroxysiloxane, and polymethylaminosiloxane.

Thus, when the organosilicon particles include the polymer with the above structural unit, the overall heat resistance and stability of the separator can be further improved.

In some embodiments, based on a total molar amount of the first structural unit, the second structural unit, and the third structural unit, a molar percentage of the first structural unit is denoted as A%, where $75 \leq A < 100$, optionally $75 \leq A \leq 80$.

In some embodiments, based on the total molar amount of the first structural unit, the second structural unit, and the third structural unit, a molar percentage of the second structural unit is denoted as B%, where $0 < B \leq 15$, optionally $5 \leq B \leq 15$.

In some embodiments, based on the total molar amount of the first structural unit, the second structural unit, and the third structural unit, a molar percentage of the third structural unit is denoted as C%, where $0 < C \leq 15$, optionally $5 \leq C \leq 15$.

In some embodiments, based on the total molar amount of the first structural unit, the second structural unit, and the third structural unit, the molar percentage of the first structural unit is denoted as A%, the molar percentage of the second structural unit is denoted as B%, and the molar percentage of the third structural unit is denoted as C%; and the first polymer satisfies one or more of conditions (1) to (3): (1) $5 \leq A/B \leq 15$, (2) $5 \leq A/C \leq 15$, and (3) A:B:C is (12 to 15):(1 to 3):(1 to 3).

In some embodiments, a number average molecular weight of the organosilicon particles is 22000 to 79000, optionally 24000 to 48000. When the number average molecular weight of the organosilicon particles is within the above range, the viscosity thereof is relatively high, which is conducive to improving the bonding strength between the separator and the positive and negative electrode plates when the organosilicon particles are applied to the separator.

In some embodiments, based on mass of the organosilicon particles, a moisture content of the organosilicon particles is less than or equal to 3500 μg/g, optionally 500 μg/g to 3000 μg/g. When the moisture content of the organosilicon particles is within the above range, the moisture content is relatively low, which can reduce the risk of side reactions of the electrolyte during the long-term charge and discharge cycle of the secondary battery, thereby improving the electrochemical performance of the secondary battery.

In some embodiments, based on mass of the coating, a mass percentage of the organosilicon particles is m1%, where $50 \leq m1 < 100$, optionally $80 \leq m1 \leq 95$, thus ensuring the heat resistance and stability of the coating.

In some embodiments, the coating further includes inorganic particles; and optionally, a mass percentage of the inorganic particles in the coating is m2%, where $0 < m2 \leq 30$. The addition of inorganic particles can further improve the heat resistance of the coating.

In some embodiments, the separator further satisfies at least one of the following conditions (a) to (c): (a) porosity of the substrate is greater than or equal to 25%, optionally 28% to 41%; (b) thickness of the substrate is less than or equal to 16 μm, optionally 3 μm to 12 μm; and (c) thickness of the coating is 0.1 μm to 4 μm, optionally 0.5 μm to 3 μm. When the separator satisfies the above conditions, the heat resistance and lightweight design of the separator can be further improved.

In some embodiments, the separator further satisfies at least one of conditions (I) to (VII): (I) a machine-direction thermal shrinkage rate $\eta 1$ of the separator at 150°C for 1 hour is ≤ 3.0%; (II) a transverse-direction thermal shrinkage rate $\eta 2$ of the separator at 150°C for 1 hour is ≤ 2.0%; (III) a machine-direction tensile strength $R_{m1}$ of the separator is ≥ 2700 kg/cm$^2$, optionally 2700 kg/cm$^2$ ≤ $R_{m1}$ ≤ 4500 kg/cm$^2$; (IV) a transverse-direction tensile strength $R_{m2}$ of the separator is ≥ 2000 kg/cm$^2$, optionally 2500 kg/cm$^2$ ≤ $R_{m2}$ ≤ 4500 kg/cm$^2$; (V) an infiltrated length L of the separator is ≥ 30 mm, optionally 30 mm ≤ L ≤ 60 mm; (VI) an infiltrated velocity u of the separator is ≥ 2 mm/s, optionally 2 mm/s ≤ u ≤ 4 mm/s; and (VII) an air permeability MAP of the separator is ≤ 300 s/100mL, optionally 130 s/100mL ≤ MAP ≤ 250 s/100mL.

According to a second aspect, this application provides a preparation method of a separator. The method is used to prepare the separator according to any one of the embodiments according to the first aspect of this application, and the method includes: S1, providing a substrate; S2, mixing organosilicon particles in a solvent to prepare a coating slurry; and S3, applying the coating slurry onto at least one surface of the substrate to form a coating, and performing drying to obtain a separator, where a particle size by volume $D_v90$ of the organosilicon particles satisfies $0 < D_v90 \leq 3.0$ μm, optionally 0.1 μm

≤ $D_v90$ ≤ 2.0 μm.

In some embodiments, based on mass of the coating, a mass percentage of the organosilicon particles is greater than or equal to 50%, optionally 80% to 95%; and/or a solid content of the coating slurry is 10% to 40%, optionally 20% to 30%.

According to a third aspect, this application provides a secondary battery, including the separator according to any one of the embodiments according to the first aspect of this application or a separator prepared using the preparation method according to any one of the embodiments according to the second aspect of this application.

According to a fourth aspect, this application provides an electric apparatus, including the secondary battery according to the third aspect of this application.

BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.

FIG. 1 is a schematic diagram of an embodiment of a secondary battery in this application.
FIG. 2 is a schematic exploded view of the embodiment of the secondary battery in FIG. 1.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack shown in FIG. 4.
FIG. 6 is a schematic diagram of an embodiment of an electric apparatus using a secondary battery in this application as a power source.

The figures are not necessarily drawn to scale.

Reference signs:

1. battery pack; 2. upper box body; 3. lower box body; 4. battery module; 5. secondary battery; 51. housing; 52. electrode assembly; 53. cover plate; and 6. electric apparatus.

**DESCRIPTION OF EMBODIMENTS**

The following specifically discloses in detail embodiments of the separator, preparation method thereof, and secondary battery and electric apparatus related thereto of this application. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, such as, an integer among 2, 3, 4, 5, 6, 7, 8, 9, 10, 11, 12, and so on.

Unless otherwise stated, all the embodiments and optional embodiments of this application can be combined with each other to form new technical solutions. Unless otherwise stated, all the technical features and optional technical features of this application can be combined with each other to form new technical solutions.

Unless otherwise specified, all the steps in this application can be performed sequentially or randomly, preferably performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the terms "first", "second", "third", and the like are merely for the purpose of description and shall not be understood as any indication or implication of relative importance.

In this application, the term "a plurality of" means two or more than two and the term "a plurality of types" means two types or more than two types.

Unless otherwise specified, the terms used in this application have well-known meanings commonly understood by persons skilled in the art.

Unless otherwise specified, numerical values of parameters mentioned in this application may be measured by using various measurement methods commonly used in the art, for example, they may be measured by using the methods provided in the embodiments of this application.

The term "alkyl" covers linear alkyl and branched alkyl. For example, the alkyl may be C1-C50 alkyl, C1-C40 alkyl, C1-C30 alkyl, C1-C20 alkyl, C1-C12 alkyl, C1-C10 alkyl, C1-C6 alkyl, or C1-C4 alkyl. In some embodiments, the alkyl group includes methyl, ethyl, propyl, isopropyl, butyl, isobutyl, tert-butyl, pentyl, hexyl, heptyl, octyl, and the like. In addition, the alkyl may be arbitrarily substituted.

When the above groups are substituted, the substituents may be halogen atoms or heteroatoms. Optionally, the heteroatoms may include nitrogen atoms; and the substituents may be nitrogen atoms or halogen atoms.

The term "halogen atoms" refers to fluorine atoms, chlorine atoms, bromine atoms, and the like.

The term "heteroatoms" refers to nitrogen atoms, sulfur atoms, phosphorus atoms, and the like.

The term "hydrogen" refers to $^1H$ (protium, H), $^2H$ (deuterium, D), or $^3H$ (tritium, T). In various embodiments, "hydrogen" may be $^1H$ (protium, H).

Throughout this specification, substituents of compounds are disclosed in groups or ranges. It is explicitly contemplated that such descriptions include every individual sub combination of members of these groups and ranges. For example, it is explicitly contemplated that the term "C1-C8 alkyl" individually discloses C1, C2, C3, C4, C5, C6, C7, C8, C1-C8, C1-C7, C1-C6, C1-C5, C1-C4, C1-C3, C1-C2, C2-C8, C2-C7, C2-C6, C2-C5, C2-C4, C2-C3, C3-C8, C3-C7, C3-C6, C3-C5, C3-C4, C4-C8, C4-C7, C4-C6, C4-C5, C5-C8, C5-C7, C5-C6, C6-C8, C6-C7, and C7-C8 alkyl.

As other examples, it is explicitly contemplated that ranges of integers from 5 to 40 individually disclose 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40; and ranges of integers from 1 to 20 individually disclose 1, 2, 3, 4, 5, 6, 7, 8, 9, 10, 11, 12, 13, 14, 15, 16, 17, 18, 19, and 20. Accordingly, other groups or ranges may be explicitly contemplated.

Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive electrode plate and the negative electrode plate and allow active ions to pass through freely to form a loop.

With the application and popularization of secondary batteries, increasingly high requirements are imposed on the energy density of secondary batteries. Thinning a separator is an effective measure for increasing the energy density of secondary batteries.

When designing a thinner separator, the inventors have found that, the separator is usually a polyolefin porous film, such as a polyethylene porous film, a polypropylene porous film, or a polypropylene/polyethylene/polypropylene threelayer composite film. After the separator is thinned, its heat resistance deteriorates, and a significant thermal shrinkage effect occurs when the separator is heated, causing direct contact between the positive and negative electrode plates inside the battery, leading to internal short circuits and increasing the safety risk of the secondary battery. Furthermore, after the separator is thinned, its mechanical properties deteriorate, making it prone to deformation, which further affects the safety performance of the secondary battery.

In view of this, the inventors propose a separator including a substrate and a coating. By further regulation of the particle size by volume $D_v90$ of the coating, a smaller coating thickness is achieved, which is conducive to the overall lightweight design of the separator. The technical solutions of this application are described in detail below.

## Separator

According to a first aspect, this application provides a separator.

The separator includes a substrate and a coating disposed on at least one surface of the substrate. The coating includes organosilicon particles, where a particle size by volume $D_v90$ of the organosilicon particles satisfies $0 < D_v90 \leq$

3μm, optionally 0.1 μm ≤ $D_v90$ ≤ 2 μm.

The coating disposed on the substrate includes organosilicon particles. Organosilicon refers to organosiloxane with a silicon-oxygen-silicon bond (-Si-O-Si-) as the main chain. Because the silicon-oxygen-silicon bond is an inorganic bond with a high bond energy, it can endow organosilicon with high heat resistance and chemical stability, for example, organosilicon can be used for a long term below 200°C. The side chain of organosilicon can be grafted with no other organic groups or grafted with an organic group. The side chain being grafted with an organic group can endow organosilicon with good dispersibility and improve the coating performance of an organosilicon coating and affinity between the coating and the substrate. The dispersion of organosilicon particles in the coating gives the coating good heat resistance, and the organosilicon particles can form a porous structure, increasing ion conduction channels of the separator, promoting the transmission of active ions, and enhancing the infiltration and retention characteristics of the separator for the electrolyte, thereby improving the long cycle life and good rate performance of the secondary battery when the separator is applied to the secondary battery.

When designing a thinner separator, the inventors have found that, the substrate, as a main support structure of the separator, needs to meet certain mechanical property requirements, and there is a positive correlation between mechanical properties and thickness. Therefore, the thickness of the substrate needs to be ensured and cannot be infinitely reduced. As a functional layer structure on the substrate, the coating can be thinned, but the particle size of the organosilicon particles in the coating limits the thickness of the coating, especially the particle size by volume $D_v90$ of the organosilicon particles affects the minimum thickness of the coating. A larger particle size by volume $D_v90$ corresponds to a smaller coating thickness, which is not conducive to the overall thinning treatment of the separator. A smaller particle size by volume $D_v90$ facilitates formation of a thinner coating during coating formation, which is beneficial for the overall thinning treatment of the separator. In this application, when 0 < $D_v90$ ≤ 3.0 μm, the particle size of the organosilicon particles is less than or equal to the thickness of the coating, which is conducive to forming a thinner coating, thereby obtaining a separator with a smaller overall thickness; and because the coating has good heat resistance and stability, the separator can effectively isolate the positive and negative electrodes of the secondary battery, thereby improving the safety performance of the secondary battery. Optionally, 0.1 μm ≤ $D_v90$ ≤ 2.0 μm. For example, the particle size by volume $D_v90$ of the organosilicon particles may be 0.05, 0.1, 0.2, 0.5, 0.8, 1.0, 2.0, 2.2, 2.5, 2.8, 3.0, or a range defined by any two of these values.

In some embodiments, a particle size distribution of the organosilicon particles satisfies ($D_v90$-$D_v10$)/$D_v50$ ≤ 2.0.

When the particle size distribution of the organosilicon particles satisfies the above range, the particle size distribution of the organosilicon particles is relatively uniform, which is conducive to the uniform dispersion of the organosilicon particles in the coating, forming a coating with a relatively uniform thickness. When the coating slurry is applied onto the surface of the substrate, the risk of the organosilicon particles falling into the pores of the substrate can be reduced, thereby ensuring the air permeability of the substrate. In addition, since the organosilicon particles are mainly distributed in the coating, the overall heat resistance of the coating can be ensured. Optionally, 0.1 ≤ ($D_v90$-$D_v10$)/$D_v50$ ≤ 1.0. For example, ($D_v90$-$D_v10$)/$D_v50$ may be 0.05, 0.1, 0.15, 0.2, 0.25, 0.3, 0.5, 0.6, 0.8, 0.9, 1.0, 1.2, 1.5, 1.8, 2.0, or a range defined by any two of these values.

In some embodiments, a particle size by volume $D_v50$ of the organosilicon particles satisfies 0.01 μm ≤ $D_v50$ ≤ 2 μm.

When the particle size by volume $D_v50$ of the organosilicon particles is too small, the particle size of the organosilicon particles is relatively small. When the coating slurry forming the coating is applied to the surface of the substrate, the organosilicon particles easily deposit in the pores of the substrate as the slurry levels, resulting in a decrease in the overall air permeability of the separator and poor ionic conductivity. During the charge and discharge process of the secondary battery, the separator has a poor effect in ion conduction, thereby reducing the kinetic performance of the secondary battery.

When the particle size by volume $D_v50$ of the organosilicon particles is too large, the organosilicon particles are stacked in 3 to 5 layers, which easily leads to an excessive thickness of the coating and in turn results in a large overall thickness of the separator. In addition, when the organosilicon particles are too large, it is difficult to form effective overlap between the organosilicon particles during coating, and large gaps between the particles easily lead to slow contact between the organosilicon particles as the substrate shrinks when the separator is heated, resulting in deteriorated heat resistance of the separator. Moreover, the shrinkage of the separator easily leads to poor isolation between the positive and negative electrode plates, making it easy for short circuits to occur between the positive and negative electrode plates.

Thus, in this application, the particle size by volume $D_v50$ of the organosilicon particles is set to satisfy 0.01 μm ≤ $D_v50$ ≤ 2 μm, which can meet the requirement for forming a thinner coating on the separator, while the above particle size allows the organosilicon particles in the coating to form tight overlap, so that when the separator is heated, the organosilicon particles quickly come into contact and compress each other, providing tensile force to the substrate and reducing the risk of substrate shrinkage, thereby ensuring the effective isolation between the positive and negative electrode plates by the separator and improving the safety performance of the secondary battery. For example, the particle size by volume $D_v50$ of the organosilicon particles may be 0.01 μm, 0.05 μm, 0.08 μm, 0.1 μm, 0.5 μm, 0.8 μm, 1 μm, 1.2

μm, 1.5 μm, 1.8 μm, 2 μm, or a range defined by any two of these values.

In some embodiments, a particle size by volume $D_v10$ of the organosilicon particles satisfies 0.01 μm ≤ $D_v10$ ≤ 2.80 μm.

When the particle size by volume $D_v10$ of the organosilicon particles satisfies the above range, the particle size distribution of the organosilicon particles is relatively concentrated, which is conducive to the uniformity of the coating thickness. For example, the particle size by volume $D_v10$ of the organosilicon particles may be 0.01 μm, 0.02 μm, 0.05 μm, 0.08 μm, 0.10 μm, 0.15 μm, 0.20 μm, 0.50 μm, 0.80 μm, 1.00 μm, 1.20 μm, 1.50 μm, 1.80 μm, 2.00 μm, 2.20 μm, 2.50 μm, 2.80 μm, or a range defined by any two of these values.

In this application, the particle size by volume $D_v90$ of a material has a well-known meaning in the art, representing a particle size corresponding to the cumulative volume distribution percentage reaching 90% of the material, and the particle size can be measured using known instruments and methods in the art. For example, the particle size can be tested using a laser particle size analyzer (such as Master Size 3000) in accordance with GB/T 19077-2016 Laser Diffraction Method for Particle Size Distribution.

In this application, the particle size by volume $D_v50$ of a material has a well-known meaning in the art, representing a particle size corresponding to the cumulative volume distribution percentage reaching 50% of the material, and the particle size can be measured using known instruments and methods in the art. For example, the particle size can be tested using a laser particle size analyzer (such as Master Size 3000) in accordance with GB/T 19077-2016 Laser Diffraction Method for Particle Size Distribution.

In this application, the particle size by volume $D_v10$ of a material has a well-known meaning in the art, representing a particle size corresponding to the cumulative volume distribution percentage reaching 10% of the material, and the particle size can be measured using known instruments and methods in the art. For example, the particle size can be tested using a laser particle size analyzer (such as Master Size 3000) in accordance with GB/T 19077-2016 Laser Diffraction Method for Particle Size Distribution.

In some embodiments, a specific surface area SSA of the organosilicon particles is 2.0 $cm^2/g$ to 50 $cm^2/g$, optionally 8.5 $cm^2/g$ to 20.5 $cm^2/g$.

When the specific surface area SSA of the organosilicon particles is within the above range, the specific surface area SSA of the organosilicon particles is relatively large, which is conducive to good overlap between the particles, making it easier for the organosilicon particles to form a porous structure, thereby promoting the migration of active ions. For example, the specific surface area SSA of the organosilicon particles may be 2.0 $cm^2/g$, 5.0 $cm^2/g$, 8.0 $cm^2/g$, 8.5 $cm^2/g$, 10.0 $cm^2/g$, 15.0 $cm^2/g$, 20.0 $cm^2/g$, 20.5 $cm^2/g$, 25.0 $cm^2/g$, 30.0 $cm^2/g$, 35.0 $cm^2/g$, 40.0 $cm^2/g$, 42.0 $cm^2/g$, 45.0 $cm^2/g$, 48.0 $cm^2/g$, 50.0 $cm^2/g$, or a range defined by any two of these values.

The specific surface area SSA of the organosilicon particles can be tested using known methods in the art. For example, the specific surface area can be tested using a nitrogen adsorption specific surface area analysis test method in accordance with GB/T 19587-2017 and calculated using a BET (Brunauer Emmett Teller) method. The nitrogen adsorption specific surface area analysis test can be carried out by using the Tri-Star 3020 specific surface area pore size analysis tester from Micromeritics in USA.

The inventors have found through further research that the morphology of the organosilicon particles has a certain impact on the coating. When the morphology of the organosilicon particles meets the following conditions, the heat resistance and stability of the separator can be further improved.

In some embodiments, the organosilicon particles have at least one of spherical, spheroidal, cubic, rhombohedral, fibrous, tubular, rod-like, and flaky morphologies.

When the organosilicon particles are spherical and/or spheroidal, they can ensure good overlap between the particles, improving the heat resistance and stability of the coating, and there are gaps between the particles, which is conducive to constructing a stable spatial network structure, thereby improving the ion transmission characteristics and external pressure resistance of the separator. Furthermore, large gaps between the spherical and/or spheroidal particles can mitigate the impact of the coating on the air permeability of the substrate, further improving the overall air permeability and ionic conductivity of the separator, and enhancing the kinetic performance of the secondary battery. Moreover, large porosity between the spherical and/or spheroidal particles is conducive to improving the wettability of the separator to the electrolyte and a liquid retention rate and liquid holding rate of the separator, further enhancing the kinetic performance of the secondary battery. In addition, the large porosity can reduce the weight, which is conducive to increasing the energy density per unit weight of the secondary battery; and it can reduce the amount of organosilicon particles used in the coating, thereby reducing the cost of the secondary battery.

When the organosilicon particles are cubic, rhombohedral, fibrous, tubular, rod-like, or flaky, the organosilicon particles can be arranged irregularly, which is conducive to better overlap between the particles, increasing contact points between the particles, thereby improving the overall shrinkage resistance of the coating and making the overall structure of the separator more stable.

Especially when the organosilicon particles include two or more of the above morphologies, the overlap between the particles is tighter, thereby further improving the overall shrinkage resistance of the coating and making the overall

structure of the separator more stable.

For example, the organosilicon particles include a spherical morphology, a cubic morphology, and the like. Alternatively, the organosilicon particles include a cubic morphology, a rhombohedral morphology, and the like.

In some embodiments, the organosilicon particles include primary particles. A relatively small particle size of the primary particles facilitates uniform dispersion of the organosilicon particles when the organosilicon particles are applied to the coating, allowing for a more uniform performance of the formed film layer.

In this application, the morphology of the organosilicon particles can be observed using a scanning electron microscope (SEM), for example, using the JSM-5610LV scanning electron microscope from FEI Company in USA, where the morphology structure is observed after vacuum metallization of a sample.

As a polymer, organosilicon can further improve the overall heat resistance and stability of the separator when it meets at least one of the following conditions.

In some embodiments, the organosilicon particles include a first polymer, the first polymer including a first structural unit, a second structural unit, and a third structural unit.

The first structural unit includes a structural unit represented by formula (I):

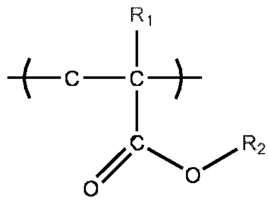
formula (I);

where in formula (I), $R_1$ includes one or more of hydrogen atom and substituted or unsubstituted C1-C5 alkyl, and optionally, $R_1$ includes one or more of hydrogen atom and substituted or unsubstituted C1-C3 alkyl; and $R_2$ includes one or more of substituted or unsubstituted C1-C20 alkyl, substituted or unsubstituted C3-C20 cycloalkyl, and substituted or unsubstituted C1-C20 hydroxyalkyl, and optionally, $R_2$ includes one or more of C1-C12 alkyl, C3-C12 cycloalkyl, and C1-C12 hydroxyalkyl.

The second structural unit includes a structural unit represented by formula (II):

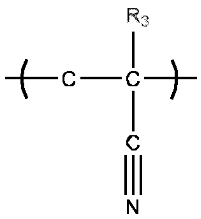
formula (II);

where in formula (II), $R_3$ includes one or more of hydrogen atom and substituted or unsubstituted C1-C5 alkyl, and optionally, $R_3$ includes one or more of hydrogen atom and substituted or unsubstituted C1-C3 alkyl.

The third structural unit includes a structural unit represented by formula (III):

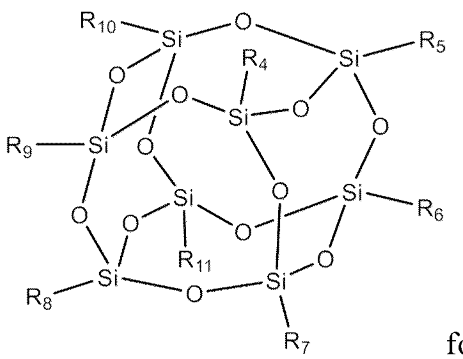
formula (III);

where in formula (III), $R_4$ to $R_{11}$ each independently include one or more of substituted or unsubstituted C1-C10 alkyl and a structural unit represented by formula (III-1), and at least one of $R_4$ to $R_{11}$ includes a structural unit represented by formula (III-1):

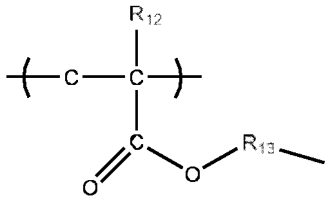

formula (III-1);

where in formula (III-1), $R_{12}$ includes one or more of hydrogen atom and substituted or unsubstituted C1-C5 alkyl, and optionally, $R_{12}$ includes one or more of hydrogen atom and substituted or unsubstituted C1-C3 alkyl; and $R_{13}$ includes substituted or unsubstituted C1-C10 alkyl, and optionally, $R_{13}$ includes substituted or unsubstituted C3-C10 alkyl.

The first structural unit can be formed by opening a carbon-carbon double bond of an acrylate monomer during polymerization. A flexible monomer chain segment in a molecular chain segment can adjust the glass transition temperature of the first polymer, improving the toughness and peel strength of the first polymer, helping to achieve good adhesion, helping to enhance the bonding strength with the substrate, and reducing the risk of the coating peeling off from the substrate. The second structural unit can be formed by opening a carbon-carbon double bond of an acrylonitrile monomer during polymerization. The second structural unit can provide excellent swelling resistance and high adhesivity, and helps to increase the ionic conductivity of the secondary battery.

The third structural unit is formed by opening a carbon-carbon double bond of substituted or unsubstituted acryloxyalkyl of polysilsesquioxane containing substituted or unsubstituted acryloxyalkyl during polymerization. Polysilsesquioxane can be considered as a material with an organic-inorganic hybrid core-shell structure, where an internal inorganic framework serves as a core, that is, a skeleton structure formed by Si-O-Si or Si-O bonds; and an outer shell is formed by organic substituents (C1-C5 alkyl), which wrap the skeleton structure and are connected to the Si element of the skeleton structure. The core structure of polysilsesquioxane can endow the polymer with advantages in heat resistance and mechanical properties. Its poor shrinkage can ensure the stability of the polymer during the long-term charge and discharge cycle of the secondary battery, effectively isolating the positive and negative electrode plates, thereby ensuring the safety performance of the secondary battery. Additionally, with a small particle size and a large specific surface area, polysilsesquioxane is physically similar to most polymer chain segments, making atoms on the surface of polysilsesquioxane highly reactive. Polysilsesquioxanemodified polymers have good heat resistance, flame retardancy, oxidation resistance, and the like.

Although the above analysis is performed based on each structural unit, a synergistic effect between the structural units cannot be ignored. Specifically, the first structural unit, the second structural unit, and the third structural unit can work together to exert the synergistic effect to improve the adhesion and heat resistance of the first polymer in the organosilicon particles, thereby ensuring the heat resistance of the coating even the coating is thin.

In some embodiments, based on a total molar amount of the first structural unit, the second structural unit, and the third structural unit, a molar percentage of the first structural unit is denoted as A%, where $75 \leq A < 100$. When the molar percentage of the first structural unit is within the above range, its proportion in the first polymer is relatively large, which can improve the flexibility of the first polymer, thereby significantly improving the adhesion of the first polymer. When applied to the separator, the first polymer can improve the bonding strength between the organosilicon particles and the substrate of the separator. Optionally, $75 \leq A \leq 80$. For example, the molar percentage of the first structural unit may be 75%, 78%, 80%, 85%, or a range defined by any two of these values.

In some embodiments, based on a total molar amount of the first structural unit, the second structural unit, and the third structural unit, a molar percentage of the second structural unit is denoted as B%, where $0 < B \leq 15$. When the molar percentage of the second structural unit is within the above range, it can significantly improve the stability of the first polymer. Optionally, $5 \leq B \leq 15$. For example, the molar percentage of the second structural unit may be 2%, 5%, 8%, 10%, 12%, 15%, or a range defined by any two of these values.

In some embodiments, based on a total molar amount of the first structural unit, the second structural unit, and the third structural unit, a molar percentage of the third structural unit is denoted as C%, where $0 < C \leq 15$. When the molar percentage of the third structural unit is within the above range, it can ensure the heat resistance of the first polymer, and its proportion is relatively small, which is conducive to increasing the proportions of the first and second structural units, thereby improving the overall adhesion and stability of the first polymer. Optionally, $5 \leq C \leq 20$. For example, the molar percentage of the third structural unit may be 2%, 5%, 8%, 10%, 12%, 15%, or a range defined by any two of these values.

The first polymer further includes the second structural unit, and the second structural unit can synergize with the first structural unit to jointly improve the swelling resistance and adhesion of the first polymer. Especially when this application further satisfies $5 \leq A/B \leq 15$, the first structural unit can more fully synergize with the second structural unit to improve the adhesion and stability of the first polymer. For example, A/B may be 5, 8, 10, 12, 15, or a range defined by any two of these values.

The first polymer further includes the third structural unit, where the inorganic structure of polysilsesquioxane in

the third structural unit can synergize with the first structural unit to improve the overall heat resistance and adhesion of the first polymer. Especially when this application further satisfies 5 ≤ A/C ≤ 15, the first structural unit can more fully synergize with the third structural unit to improve the adhesion and heat resistance of the first polymer. For example, A/C may be 5, 8, 10, 12, 15, or a range defined by any two of these values.

In some embodiments, A:B:C is (12 to 15):(1 to 3):(1 to 3). When the molar percentages of the first structural unit, the second structural unit, and the third structural unit satisfy the above ratio, the three structural units in the first polymer can synergize with each other to jointly improve the adhesion, stability, swelling resistance, and thermal stability of the first polymer.

The first structural unit includes various chemical structures, and the following describes specific chemical structures of the first structural unit.

In some embodiments, $R_1$ includes hydrogen atom or methyl.

In some embodiments, $R_2$ includes methyl, ethyl, n-propyl, isopropyl, n-butyl, sec-butyl, tert-butyl, n-pentyl, n-octyl, isooctyl, 2-ethylhexyl, dodecyl, or isobornyl.

For example, the first structural unit includes one or more of structures represented by formula (I-1) to formula (I-8):

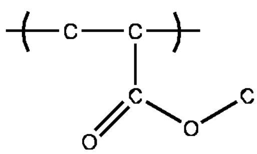 formula (I-1), 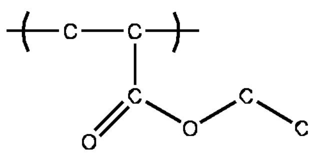 formula (I-2),

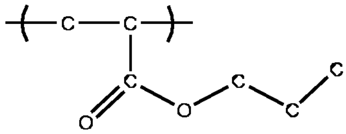 formula (I-3), 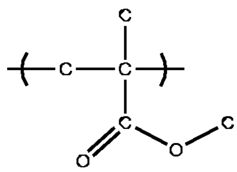 formula (I-4),

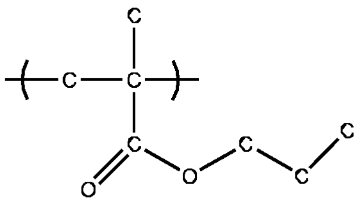 formula (I-5), 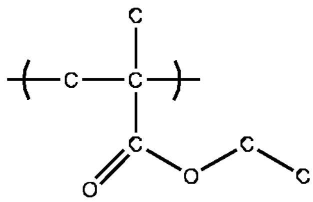

formula (I-6),

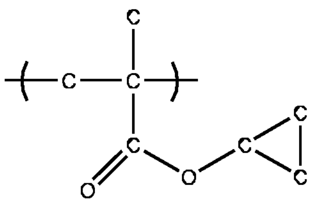 formula (I-7), and 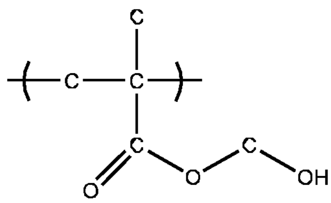

formula (I-8).

The second structural unit includes various chemical structures, and the following describes specific chemical structures of the second structural unit.

In some embodiments, $R_3$ includes hydrogen atom or methyl.

For example, the second structural unit includes one or more of structures represented by formula (II-1) to formula (II-4):

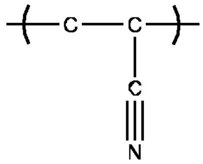 formula (II-1), 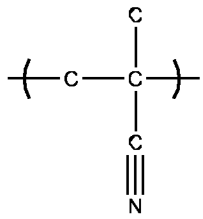 formula (II-2),

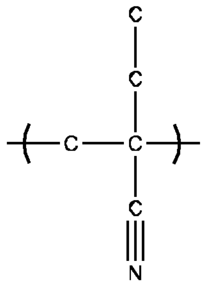 formula (II-3), and

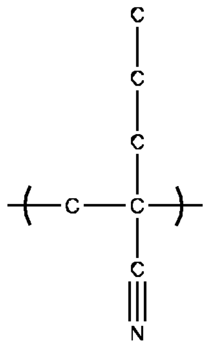 formula (II-4).

The third structural unit includes various chemical structures, and the following describes specific chemical structures of the third structural unit.

In some embodiments, $R_4$ to $R_{11}$ each independently include a structural unit represented by formula (III-1), that is, $R_4$ to $R_{11}$ all include the structural unit represented by formula (III-1), but $R_4$ to $R_{11}$ can be the same or different. Optionally, $R_{12}$ includes hydrogen atom, methyl, ethyl, n-propyl, isopropyl, n-butyl, sec-butyl, tert-butyl, or n-pentyl; and/or $R_{13}$ includes n-propyl, isopropyl, n-butyl, sec-butyl, tert-butyl, n-pentyl, n-octyl, isooctyl, or 2-ethylhexyl.

In some embodiments, one of $R_4$ to $R_{11}$ includes a structural unit represented by formula (III-1), that is, only one of $R_4$ to $R_{11}$ includes the structural unit represented by formula (III-1). Optionally, $R_{12}$ includes hydrogen atom, methyl, ethyl, n-propyl, isopropyl, n-butyl, sec-butyl, tert-butyl, or n-pentyl; and/or $R_{13}$ includes n-propyl, isopropyl, n-butyl, sec-butyl, tert-butyl, n-pentyl, n-octyl, isooctyl, or 2-ethylhexyl.

In this application, the types of groups in the polymer can be determined by infrared spectroscopy. For example, the infrared spectrum of the material can be tested to determine a characteristic peak of the infrared spectrum, so as to determine the type of the modified group. Specifically, infrared spectroscopy can be performed on the material by using instruments and methods known in the art, for example, the test is performed by using an infrared spectrometer (for example, an IS10 Fourier transform infrared spectrometer from Nicolet in USA) according to general rules of GB/T 6040-2019 infrared spectroscopy method.

In some embodiments, the infrared spectrum of the first polymer has a characteristic peak at 1750 $cm^{-1}$ to 1735 $cm^{-1}$, indicating the presence of ester groups.

In some embodiments, the infrared spectrum of the first polymer has a characteristic peak at 2260 $cm^{-1}$ to 2220 $cm^{-1}$, indicating the presence of cyano groups.

In some embodiments, the infrared spectrum of the first polymer has a characteristic peak at 1100 $cm^{-1}$ to 1120 $cm^{-1}$, indicating the presence of a Si-O-Si skeleton of polysilsesquioxane.

In some embodiments, the first polymer can be prepared by the following method. The method includes:

Step S100. Provide a first monomer, a second monomer, and a third monomer.

Step S200. Mix the first monomer, the second monomer, and the third monomer, and make them to experience a polymerization reaction under the action of an initiator to obtain the first polymer.

In this application, the first monomer, the second monomer, and the third monomer are copolymerized after mixed, and the formed first polymer is a copolymer of the three monomers.

The first monomer includes a structural unit represented by formula (IV),

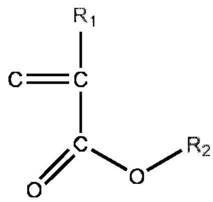

formula (IV);

where in formula (IV), in formula (I), $R_1$ includes one or more of hydrogen atom and substituted or unsubstituted C1-C5 alkyl, and optionally $R_1$ includes one or more of hydrogen atom and substituted or unsubstituted C1-C3 alkyl; and $R_2$ includes one or more of substituted or unsubstituted C1-C20 alkyl, substituted or unsubstituted C3-C20 cycloalkyl, and substituted or unsubstituted C1-C20 hydroxyalkyl, and optionally $R_2$ includes one or more of C1-C12 alkyl, C3-C12 cycloalkyl, and C1-C12 hydroxyalkyl.

The first monomer is an acrylate compound, and the first structural unit is formed by opening a carbon-carbon double bond during polymerization of the first monomer.

For example, the first monomer includes one or more of methyl acrylate, ethyl acrylate, n-propyl acrylate, isopropyl acrylate, n-butyl acrylate, isobutyl acrylate, sec-butyl acrylate, tert-butyl acrylate, n-pentyl acrylate, n-octyl acrylate, isooctyl acrylate, 2-ethylhexyl acrylate, cyclohexyl acrylate, lauryl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

The second monomer includes a structural unit represented by formula (V):

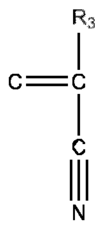

formula (V);

where in formula (V), $R_3$ includes one or more of hydrogen atom and substituted or unsubstituted C1-C5 alkyl; and optionally, $R_3$ includes one or more of hydrogen atom and substituted or unsubstituted C1-C3 alkyl.

The second monomer is an acrylonitrile compound, and the second structural unit is formed by opening a carbon-carbon double bond during polymerization of the second monomer.

For example, the second monomer includes acrylonitrile and/or methacrylonitrile.

The third monomer includes a structural unit represented by formula (VI):

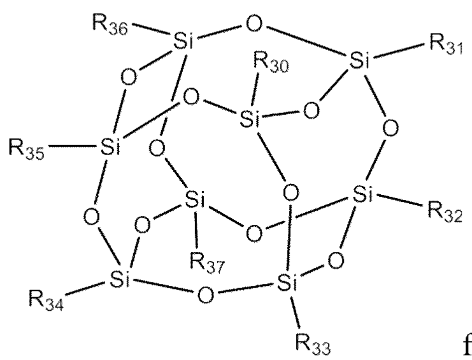

formula (VI);

where in formula (VI), $R_{30}$ to $R_{37}$ each independently include one or more of substituted or unsubstituted C1-C10 alkyl, or a structural unit represented by formula (VI-1), and at least one of $R_{30}$ to $R_{37}$ includes a structural unit represented by formula (VI-1):

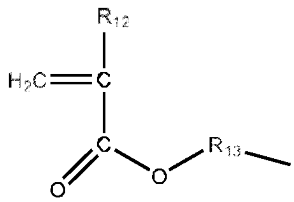
formula (VI-1);

where in formula (VI-1), $R_{12}$ includes one or more of hydrogen atom, or substituted or unsubstituted C1-C5 alkyl; and optionally, $R_{12}$ includes one or more of hydrogen atom, or substituted or unsubstituted C1-C3 alkyl; and $R_{13}$ includes substituted or unsubstituted C1-C10 alkyl, and optionally, $R_{13}$ includes substituted or unsubstituted C3-C10 alkyl.

For example, the third monomer includes one or more of methacryloxypropyl cage polysilsesquioxane, methacryloxypropyl hepta(isobutyl)polysilsesquioxane, methacryloxypropyl hepta(octyl)polysilsesquioxane, acryloxypropyl cage polysilsesquioxane, acryloxypropyl hepta(isobutyl)polysilsesquioxane, and methacryloxypropyl hepta(octyl) polysilsesquioxane.

In some embodiments, step S200 specifically includes the following steps.

Step S210. Add the first monomer, the second monomer, and the third monomer into a solvent and an emulsifier and mix them to form a mixed system.

Step S220. Add an initiator into the mixed system, and make the mixed system experience a polymerization reaction under the action of the initiator to obtain the first polymer.

In this application, the copolymerization of a plurality of monomers is implemented through emulsion polymerization, making the polymerization method simpler. Certainly, other polymerization methods can also be used in this application, such as solution polymerization and suspension polymerization. Process parameters used in the polymerization process can be selected from commonly used parameters in the art and are not described in detail herein.

In some embodiments, the emulsifier includes one or more of sodium dodecyl sulfate, sodium dodecylbenzene sulfonate, alkyl diphenyl oxide disulfonate, and ethoxylated alkylphenol sulfate ammonium salt.

In some embodiments, based on a total mass of the mixed system, a ratio of a mass percentage of the emulsifier to a mass percentage of the first monomer, second monomer and third monomer is 0.1% to 5%, that is, the amount of the emulsifier used is 0.1% to 5% of the total mass of the three monomers. When the mass percentage of the emulsifier is within the above range, the first monomer, the second monomer, and the third monomer can be emulsified and dispersed in the solvent to form a relatively uniform system.

In some embodiments, the initiator includes potassium persulfate and/or ammonium persulfate.

In some embodiments, based on the total mass of the mixed system, a mass percentage of the initiator to the mass percentage of the first monomer, second monomer and third monomer is 0.15% to 1%, that is, the amount of the initiator used is 0.1% to 5% of the total mass of the three monomers. When the mass percentage of the initiator is within the above range, sufficient polymerization can be ensured.

In some embodiments, the solvent may include water, such as deionized water.

In a specific embodiment, the method includes:

Preparation of prepolymer: Deionized water, an emulsifier, a first polymer monomer, a second polymer monomer, and a third polymer monomer are well blended and stirred to obtain a prepolymer.

Preparation of the first polymer: The emulsifier and the deionized water are added into a container, and stirred and emulsified for 30 minutes to 60 minutes to obtain a uniform and stable emulsion; then the prepolymer prepared in the previous step and an initiator solution (a solution formed by dissolving an initiator potassium persulfate and/or ammonium persulfate in deionized water) are slowly dropwise added into the emulsion; the resulting mixture is heated to 90°C to 110°C after the dropwise addition is completed; the temperature is maintained for reaction for 0.5 h; and the resulting mixture is cooled to 40°C, adjusted to a pH of 7 to 8 with ammonia water, filtered, and dried to obtain the first polymer.

In some embodiments, the organosilicon particles further include a second polymer, the second polymer including a structural unit represented by formula (a):

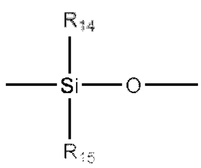
formula (a);

where in formula (a), $R_{14}$ and $R_{15}$ each independently include one or more of substituted or unsubstituted C1-C10 alkyl,

hydroxy, or amino. Optionally, $R_{14}$ and $R_{15}$ each independently include one or more of substituted or unsubstituted C1-C6 alkyl, hydroxy, or amino.

For example, the second polymer includes at least one of structures represented by formula (a-1) to formula (a-5):

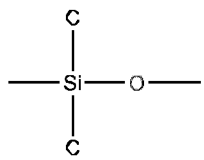 formula (a-1), 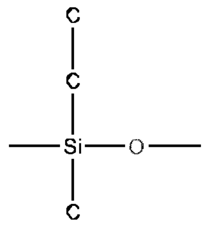 formula (a-2),

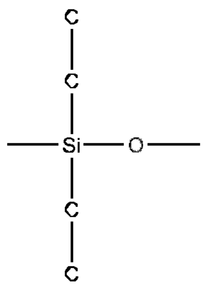 formula (a-3), 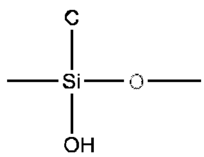 formula (a-4), and 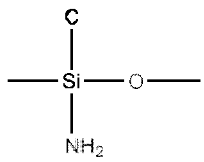

formula (a-5).

For example, the second polymer may include one or more of polymethylsiloxane, polydimethylsiloxane, polydiethylsiloxane, polymethylhydroxysiloxane, and polymethylaminosiloxane.

In this application, the first polymer and the second polymer are only used to distinguish the types of materials and do not have any sequential or quantitative limitations.

In some embodiments, a number average molecular weight of the organosilicon particles is 22000 to 79000, optionally 24000 to 48000. For example, the number average molecular weight of the polymer may be 22000, 23000, 24000, 25000, 30000, 35000, 40000, 45000, 46000, 47000, 48000, or a range defined by any two of these values. When the number average molecular weight of the organosilicon particles is within the above range, the organosilicon particles have relatively high viscosity, which is conducive to improving the adhesion strength between the separator and the positive and negative electrode plates when the organosilicon particles are applied to the separator. The number average molecular weight of the organosilicon particles being within the above range is conducive to forming organosilicon particles with relatively small particle sizes. When applied to the separator, the organosilicon particles can achieve formation of a thin coating of the separator, reducing the overall thickness of the separator, thereby facilitating the improvement of the energy density of the secondary battery. Furthermore, the particle size of the polymer-formed organosilicon particles is not too small, reducing the risk of the organosilicon particles blocking the substrate of the separator, thereby improving the overall air permeability and the like of the separator.

In this application, the number average molecular weight of the polymer can be tested by gel permeation chromatography (GPC). Specifically, the test is performed using the GPC1515 instrument from Waters Company in USA, where a sample is dissolved in tetrahydrofuran, with a dissolution time of more than 12 hours and a sample concentration of 4 mg/mL, filtered for preparation, and then tested at a temperature of 25°C and at a flow rate of 1 mL/min.

The inventors have found through further research that during the long-term charge and discharge process of the secondary battery, the moisture in the separator is gradually released into the electrolyte. The electrolyte is highly sensitive to moisture and easily generates hydrofluoric acid (HF) when encountering water, thereby increasing the acidity of the electrolyte, causing corrosion of active materials and current collectors, and possibly leading to the dissolution of transition metal ions in the active materials, thereby affecting the electrochemical performance of the secondary battery. Therefore, in this application, the moisture content of the organosilicon particles is controlled to be less than or equal to 3500 μg/g; optionally 500 μg/g to 3000 μg/g, based on the mass of the organosilicon particles. When the moisture content of the organosilicon particles is within the above range, the moisture content is relatively low, which can reduce the risk of side reactions of the electrolyte during the long-term charge and discharge cycle of the secondary battery, thereby improving the electrochemical performance of the secondary battery. For example, the moisture content of the organosilicon particles may be 300 μg/g, 500 μg/g, 800 μg/g, 1000 μg/g, 1200 μg/g, 1500 μg/g, 1800 μg/g, 2000 μg/g, 2500 μg/g, 2800 μg/g, 3000 μg/g, 3500 μg/g, or a range defined by any two of these values.

The moisture content of the organosilicon particles can be tested using a moisture analyzer, using the Karl Fischer moisture measurement method as a test method, and using the 831 Karl Fischer moisture analyzer from Metrohm in Switzerland as a test instrument.

In some embodiments, a mass percentage of the organosilicon particles is m1%, where $50 \leq m1 < 100$, optionally $80 \leq m1 \leq 95$, thus ensuring the heat resistance and stability of the coating. For example, the mass percentage of the organosilicon particles may be 50%, 60%, 70%, 80%, 85%, 90%, 95%, 97%, or a range defined by any two of these values.

In some embodiments, the coating may further include inorganic particles. The addition of the inorganic particles can further improve the heat resistance of the coating.

In some embodiments, a mass percentage of the inorganic particles in the coating is m2%, where $0 < m2 \leq 30$. For example, the mass percentage of the inorganic particles in the coating is 1%, 2%, 3%, 4%, 5%, 6%, 7%, 8%, 9%, 10%, 15%, 20%, 25%, 30%, or a range defined by any two of these values.

The inorganic particles may include at least one of inorganic particles with a dielectric constant of 5 or higher, inorganic particles capable of transmitting active ions, and inorganic particles capable of undergoing electrochemical oxidation and reduction.

In some embodiments, the inorganic particles with a dielectric constant of 5 or higher may include at least one of boehmite ($\gamma$-AlOOH), alumina ($Al_2O_3$), barium sulfate ($BaSO_4$), magnesium oxide (MgO), magnesium hydroxide ($Mg(OH)_2$), silicon oxide compound $SiO_X$ ($0 < x \leq 2$), tin dioxide ($SnO_2$), titanium dioxide ($TiO_2$), calcium oxide (CaO), zinc oxide (ZnO), zirconium dioxide ($ZrO_2$), yttrium oxide ($Y_2O_3$), nickel oxide (NiO), hafnium dioxide ($HfO_2$), cerium oxide ($CeO_2$), zirconium titanate ($ZrTiO_3$), barium titanate ($BaTiO_3$), magnesium fluoride ($MgF_2$), lead zirconate $Pb(Zr, Ti)O_3$ (PZT for short), $Pb_{1-m}La_mZr_{1-n}Ti_nO_3$ (PLZT for short, $0 < m < 1$, and $0 < n < 1$), and $Pb(Mg_3Nb_{2/3})O_3$-$PbTiO_3$ (PMN-PT for short).

In some embodiments, the inorganic particles capable of transmitting active ions may include at least one of lithium phosphate ($Li_3PO_4$), lithium titanium phosphate ($Li_xTi_y(PO_4)_3$, where $0 < x < 2$, and $0 < y < 3$), lithium aluminum titanium phosphate ($Li_xAl_yTi_z(PO_4)_3$, where $0 < x < 2$, $0 < y < 1$, and $0 < z < 3$), $(LiAlTiP)_xO_y$ glass ($0 < x < 4$, and $0 < y < 13$), lithium lanthanum titanium oxide ($Li_xLa_yTiO_3$, where $0 < x < 2$, and $0 < y < 3$), lithium germanium phosphorus sulfide ($Li_xGe_yP_zS_w$, where $0 < x < 4$, $0 < y < 1$, $0 < z < 1$, and $0 < w < 5$), lithium nitride ($Li_xN_y$, where $0 < x < 4$, and $0 < y < 2$), silicon sulfide glass ($Li_xSi_yS_z$, where $0 < x < 3$, $0 < y < 2$, and $0 < z < 4$), and $P_2S_5$ glass ($Li_xP_yS_z$, where $0 < x < 3$, $0 < y < 3$, and $0 < z < 7$).

In some embodiments, the inorganic particles capable of undergoing electrochemical oxidation and reduction may include at least one of lithium-containing transition metal oxides, olivine-structured lithium phosphates, carbonbased materials, silicon-based materials, tin-based materials, and lithium titanium compounds.

In some embodiments, the coating may further include other organic particles. For example, the organic particles may include at least one of polystyrene, polyethylene, polyimide, melamine resin, phenolic resin, polypropylene, polyester (for example, polyethylene terephthalate, polyethylene naphthalate, polyethylene butylene terephthalate), polyphenylene sulfide, polyaramid, polyamide-imide, polyimide, a butyl acrylate and ethyl methacrylate copolymer, and a mixture thereof.

In some embodiments, the coating may further include a binder. In an example, the binder may include at least one of water-soluble acrylic resin (for example, acrylic acid, methacrylic acid, sodium acrylate monomer homopolymer, or other comonomer copolymers), polyvinyl alcohol (PVA), isobutylene-maleic anhydride copolymer, and polyacrylamide.

In some embodiments, the thickness of the coating may be 0.1 $\mu$m to 4 $\mu$m, optionally 0.5 $\mu$m to 3 $\mu$m. This is conducive to increasing the energy density of the secondary battery. In this application, the thickness of the coating refers to the thickness of the coating on one side of the substrate. For example, the thickness of the coating may be 0.1 $\mu$m, 0.5 $\mu$m, 1 $\mu$m, 1.5 $\mu$m, 2 $\mu$m, 2.5 $\mu$m, 3 $\mu$m, 3.5 $\mu$m, 4 $\mu$m, or a range defined by any two of these values.

In some embodiments, the thickness of the substrate may be less than or equal to 16 $\mu$m, optionally 3 $\mu$m to 12 $\mu$m. The coating in this application can significantly enhance the heat resistance of the separator, allowing for the selection of a thinner substrate, thereby helping to increase the energy density of the secondary battery. For example, the thickness of the substrate may be 1 $\mu$m, 2 $\mu$m, 3 $\mu$m, 5 $\mu$m, 10 $\mu$m, 12 $\mu$m, 15 $\mu$m, 16 $\mu$m, or a range defined by any two of these values.

In some embodiments, the porosity of the substrate is greater than or equal to 25%, optionally 28% to 41%. The porosity of the substrate being within the above range can ensure the air permeability of the substrate, which is conducive to the migration of active ions. Additionally, the relatively small porosity can ensure the mechanical properties of the substrate, providing good support for the coating.

The substrate is not limited to any particular material in this application and may be any well-known substrate with good chemical stability and mechanical stability. For example, the substrate may include at least one of porous polyolefinbased resin film (for example, at least one of polyethylene, polypropylene, and polyvinylidene fluoride), porous glass fiber, and porous nonwoven fabric. The substrate may be a single-layer film or a multi-layer composite film. When the substrate is a multi-layer composite film, the layers may be made of a same material or different materials.

In some embodiments, the separator may further include an adhesive layer, where the adhesive layer is disposed on at least a part of the surface of the coating, and the adhesive layer includes a binder. The adhesive layer can not only

prevent the coating from falling off, improving the adhesion between the coating and the substrate and the safety performance of the secondary battery, but also improve an interface between the separator and the electrode, enhancing the cycle performance of the secondary battery.

Optionally, the binder includes at least one of acrylate monomer homopolymer or copolymer, acrylic monomer homopolymer or copolymer, and fluorine-containing olefin monomer homopolymer or copolymer. The comonomer includes but is not limited to at least one of the following: acrylate monomer, acrylic monomer, olefin monomer, halogen-containing olefin monomer, and fluoroether monomer.

Optionally, the binder includes a vinylidene fluoride-based polymer, for example, a homopolymer of vinylidene fluoride (VDF) monomer, and/or a copolymer of vinylidene fluoride monomer and a comonomer. The comonomer may be at least one of olefin monomer, fluorine-containing olefin monomer, chlorinecontaining olefin monomer, acrylate monomer, acrylic monomer, and fluoroether monomer. Optionally, the comonomer may include at least one of the following: trifluoroethylene (VF3), chlorotrifluoroethylene (CTFE), 1,2-difluoroethylene, tetrafluoroethylene (TFE), hexafluoropropylene (HFP), perfluoro(alkyl vinyl ether) (for example, perfluoro(methyl vinyl ether) PMVE, perfluoro(ethyl vinyl ether) PEVE, and perfluoro(propyl vinyl ether) PPVE), perfluoro(1,3-dioxole), and perfluoro(2,2-dimethyl-1,3-dioxole) (PDD).

In some embodiments, a machine-direction thermal shrinkage rate $\eta 1$ of the separator at 150°C for 1 hour is $\leq$ 3.0%.

In some embodiments, a transverse-direction thermal shrinkage rate $\eta 2$ of the separator at 150°C for 1 hour is $\leq$ 2.0%.

The separator in this application has low thermal shrinkage rates in both the transverse and machine directions at a high temperature of 150°C, which can improve the safety performance of the secondary battery.

In some embodiments, the separator has a machine-direction tensile strength $R_{m1} \geq 2700$ kg/cm$^2$, optionally 2700 kg/cm$^2$ $\leq R_{m1} \leq$ 4500 kg/cm$^2$.

In some embodiments, the separator has a transverse-direction tensile strength $R_{m2} \geq 2000$ kg/cm$^2$, optionally 2500 kg/cm$^2$ $\leq R_{m2} \leq$ 4500 kg/cm$^2$.

The separator in this application has high tensile strength in both the transverse and machine directions, allowing for a low probability of damage to the separator when the secondary battery swells, thereby improving the safety performance of the secondary battery.

In some embodiments, the separator has an infiltrated length $L \geq 30$ mm, optionally 30 mm $\leq L \leq$ 60 mm.

In some embodiments, the separator has an infiltrated velocity $u \geq 2$ mm/s, optionally 2 mm/s $\leq u \leq$ 4 mm/s.

The separator in this application has a good ability to absorb and retain the electrolyte, thereby increasing the ionic conductivity of the separator and the extractable capacity of the secondary battery.

In some embodiments, the separator has an air permeability MAP $\leq$ 300 s/100mL, optionally 130 secs/100 mL $\leq$ MAP $\leq$ 250 secs/100 mL. The separator in this application has good air permeability, thereby increasing the ionic conductivity and the extractable capacity of the secondary battery.

In this application, the thermal shrinkage rate, tensile strength, and air permeability of the separator all have the meanings well-known in the art, and can be measured using known methods in the art. For example, all of them can be measured in accordance with the standards of GB/T 36363-2018.

In this application, the infiltrated length and infiltrated velocity of the separator both have the meanings well-known in the art, and can be measured using known methods in the art. An example test method is as follows: the separator is cut into samples with a width of 5 mm and a length of 100 mm; each sample is placed horizontally after its two ends are fixed; 0.5 mg of an electrolyte is dropwise added to the center of the sample; and after a specified time (1 min in this application), a photo is taken and a diffusion length of the electrolyte is measured, to obtain the infiltrated length and infiltrated velocity of the separator. To ensure the accuracy of test results, a plurality of (for example, 5 to 10) samples can be tested, and the test results are obtained by calculating an average value. The electrolyte can be prepared according to the following method: Ethylene carbonate (EC), ethyl methyl carbonate (EMC), and diethyl carbonate (DEC) are mixed at a mass ratio of 30:50:20 to obtain an organic solvent, and fully dried $LiPF_6$ is dissolved in the organic solvent to prepare an electrolyte with a concentration of 1 mol/L.

It should be noted that parameters (such as thickness) of the coating of the separator mentioned above all refer to parameters of the coating on one side of the substrate. When the coating is disposed on both sides of the substrate, the coating is considered to fall within the protection scope of this application as long as parameters of the coating on either side satisfy this application.

## Preparation method

According to a second aspect, this application provides a preparation method of a separator. The method can be used to prepare the separator according to any one of the embodiments according to the first aspect of this application.

The method includes the following steps: S1, providing a substrate; S2, mixing organosilicon particles in a solvent to prepare a coating slurry; and S3, applying the coating slurry onto at least one surface of the substrate to form a coating,

and performing drying to obtain a separator, where a particle size by volume $D_v90$ of the organosilicon particles satisfies $0 < D_v90 \leq 3.0\ \mu m$.

In some embodiments, $0.1\ \mu m \leq D_v90 \leq 2.0\ \mu m$.

In some embodiments, in S2, the solvent may be water, such as deionized water.

In some embodiments, in S2, the coating slurry may further include other components, for example, may further include a dispersant, a wetting agent, a binder, and the like.

In some embodiments, in S2, based on mass of the coating, a mass percentage of the organosilicon particles is ≥ 50%, optionally 80% to 95%. The mass percentage of the organosilicon particles being within the above range can significantly improve the heat resistance and stability of the coating.

In some embodiments, a solid content of the coating slurry is 10% to 40%, optionally 20% to 30%.

In some embodiments, in S3, coating is performed using a coater. In this application, the model of the coater is not specially limited, for example, a commercially available coater can be used. The coater includes a gravure roller, and the gravure roller is used to transfer the slurry to the substrate.

In some embodiments, in S3, the coating method may be transfer coating, rotary spraying, dipping, or the like.

In some embodiments, the method further includes the following step: S4, secondary coating, applying a slurry containing a binder onto at least a part of the surface of the coating, and drying to form an adhesive layer.

According to the preparation method of the separator in this application, the coating is obtained through one-time coating, greatly simplifying the production process of the separator.

For some raw materials used in the preparation method of the separator in this application and parameters such as percentages thereof, reference can be made to the separator according to the first aspect of the embodiments of this application. Details are not described herein again.

Unless otherwise specified, all raw materials used in the preparation method of the separator in this application are commercially available.

## Secondary battery

According to a third aspect, this application further provides a secondary battery.

The secondary battery, also referred to as a rechargeable battery or a storage battery, is a battery that can be charged after being discharged to activate active materials for continuous use. Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive and negative electrodes and allow active ions to pass through.

The secondary battery is not limited to any particular type in this application. For example, the secondary battery may be a lithium-ion battery, a sodium-ion battery, or the like, and particularly, the secondary battery may be a lithium-ion secondary battery.

The secondary battery of this application includes the separator according to the first aspect of this application or a separator prepared using the method according to the second aspect of the embodiments of this application, where the separator is sandwiched between the positive electrode plate and the negative electrode plate. Optionally, at least a side of the separator closer to the negative electrode plate has the coating of this application. Further, a side of the separator closer to the positive electrode plate has the coating of this application, and the side of the separator closer to the negative electrode plate also has the coating of this application. Thus, the secondary battery of this application can improve its energy density and safety performance.

[Positive electrode plate]

In some embodiments, the positive electrode plate includes a positive electrode current collector and a positive electrode film layer disposed on at least one surface of the positive electrode current collector and including a positive electrode active material. For example, the positive electrode current collector has two opposite surfaces in its thickness direction, and the positive electrode film layer is disposed on either or both of the two opposite surfaces of the positive electrode current collector.

When the secondary battery in this application is a lithium-ion battery, the positive electrode active material may include but is not limited to at least one of lithium-containing transition metal oxide, lithium-containing phosphate, and their respective modified compounds. Examples of the lithium-containing transition metal oxide may include but are not limited to at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of the lithium-containing phosphate may include but are not limited to at least one of lithium iron phosphate, a composite material of lithium iron phosphate and carbon, lithium manganese phosphate, a composite material of lithium manganese phosphate and carbon, lithium manganese iron

phosphate, a composite material of lithium manganese iron phosphate and carbon, and their respective modified compounds.

In some embodiments, to further increase the energy density of the secondary battery, the positive electrode active material for lithium-ion batteries may include at least one of a lithium transition metal oxide with a general formula $Li_aNi_bCo_cM_dO_eA_f$ and a modified compound thereof, where $0.8 \leq a \leq 1.2$, $0.5 \leq b < 1$, $0 < c < 1$, $0 < d < 1$, $1 \leq e \leq 2$, and $0 \leq f \leq 1$; M includes at least one of Mn, Al, Zr, Zn, Cu, Cr, Mg, Fe, V, Ti, and B; and A includes at least one of N, F, S, and Cl.

For example, the positive electrode active material for lithium-ion batteries may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

When the secondary battery in this application is a sodium-ion battery, the positive electrode active material may include but is not limited to at least one of sodium-containing transition metal oxide, a polyanionic material (such as phosphate, fluorophosphate, pyrophosphate, and sulfate), and a Prussian blue material.

For example, the positive electrode active material for sodium-ion batteries may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue material, and a material with a general formula $X_pM'_q(PO_4)_rO_xY_{3-x}$. In the general formula $X_pM'_q(PO_4)_rO_xY_{3-x}$, $0 < p \leq 4$, $0 < q \leq 2$, $1 \leq r \leq 3$, and $0 \leq x \leq 2$; X includes at least one of $H^+$, $Li^+$, $Na^+$, $K^+$, and $NH_4^+$; M' is a transition metal cation, optionally at least one of V, Ti, Mn, Fe, Co, Ni, Cu, and Zn; and Y is a halogen anion, optionally at least one of F, Cl, and Br.

In this application, modified compounds of the above positive electrode active materials may be formed by performing doping modification and/or surface coating modification on the positive electrode active materials.

In some embodiments, the positive electrode film layer further optionally includes a positive electrode conductive agent. The positive electrode conductive agent is not limited to a particular type in this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, based on a total mass of the positive electrode film layer, a mass percentage of the positive electrode conductive agent is $\leq 5\%$.

In some embodiments, the positive electrode film layer further optionally includes a positive electrode binder. The positive electrode binder is not limited to a particular type in this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylic resin. In some embodiments, based on the total mass of the positive electrode film layer, a mass percentage of the positive electrode binder is $\leq 5\%$.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. For example, the metal material may include at least one of aluminum, aluminum alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

[Negative electrode plate]

In some embodiments, the negative electrode plate includes a negative electrode current collector and a negative electrode film layer disposed on at least one surface of the negative electrode current collector and including a negative electrode active material. For example, the negative electrode current collector has two opposite surfaces in its thickness direction, and the negative electrode film layer is provided on either or both of the two opposite surfaces of the negative electrode current collector.

The negative electrode active material may be a negative electrode active material for secondary batteries well-known in the art. For example, the negative electrode active material may include but is not limited to at least one of natural graphite, artificial graphite, soft carbon, hard carbon, a silicon-based material, a tin-based material, and lithium titanate. The silicon-based material may include at least one of elemental silicon, silicon oxide, silicon-carbon composite, silicon-nitrogen composite, and a silicon alloy material. The tin-based material may include at least one of elemental tin, tin oxide, and a tin alloy material.

In some embodiments, the negative electrode film layer further optionally includes a negative electrode

conductive agent. The negative electrode conductive agent is not limited to a particular type in this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments, based on a total mass of the negative electrode film layer, a mass percentage of the negative electrode conductive agent is ≤ 5%.

In some embodiments, the negative electrode film layer further optionally includes a negative electrode binder. The negative electrode binder is not limited to a particular type in this application. For example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). In some embodiments, based on the total mass of the negative electrode film layer, a mass percentage of the negative electrode binder is ≤ 5%.

In some embodiments, the negative electrode film layer further optionally includes another additive. For example, the another additive may include a thickener, for example, sodium carboxymethyl cellulose (CMC) or PTC thermistor material. In some embodiments, based on the total mass of the negative electrode film layer, a mass percentage of the another additive is ≤ 2%.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. For example, the metal material may include at least one of copper, copper alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional another additive in a solvent and stirring them to uniformity. The solvent may be but is not limited to N-methylpyrrolidone (NMP) or deionized water.

The negative electrode plate does not exclude additional functional layers other than the negative electrode film layer. For example, in some embodiments, the negative electrode plate in this application further includes a conductive primer layer (for example, including a conductive agent and a binder) disposed on the surface of the negative electrode current collector and sandwiched between the negative electrode current collector and the negative electrode film layer. In some other embodiments, the negative electrode plate in this application further includes a protection layer covering the surface of the negative electrode film layer.

[Electrolyte]

In a charge and discharge process of the secondary battery, active ions intercalate and deintercalate between the positive electrode plate and the negative electrode plate. The electrolyte is between the positive electrode plate and the negative electrode plate to mainly conduct active ions. The type of the electrolyte is not particularly limited in this application, and may be selected depending on actual needs.

The electrolyte includes an electrolytic salt and a solvent. The types of the electrolytic salt and solvent are not specifically limited, and may be selected depending on actual needs.

When the secondary battery in this application is a lithium-ion battery, for example, the electrolytic salt may include but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

When the secondary battery in this application is a sodium-ion battery, for example, the electrolytic salt may include but is not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bistrifluoromethanesulfonimide (NaTFSI), sodium trifluoromethanesulfonate (NaTFS), sodium difluoro(oxalato)borate (NaDFOB), sodium dioxalate borate (NaBOB), sodium difluorophosphate ($NaPO_2F_2$), sodium difluoro(dioxalato)phosphate (NaDFOP), and sodium tetrafluoro oxalato phosphate (NaTFOP).

For example, the solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl

propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methyl sulfone (EMS), and ethyl sulfonyl ethane (ESE).

In some embodiments, the electrolyte further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature power performance of the battery.

In some embodiments, the positive electrode plate, the separator, and the negative electrode plate may be made into an electrode assembly through winding and/or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a bag type soft pouch. A material of the soft pack may be plastic, for example, at least one of polypropylene (PP), polybutylene terephthalate (PBT), and polybutylene succinate (PBS).

The secondary battery is not limited to any particular shape in this application, and may be cylindrical, rectangular, or of any other shapes. FIG. 1 shows a rectangular secondary battery 5 as an example.

In some embodiments, as shown in FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding and/or lamination. The electrode assembly 52 is packaged in the accommodating cavity. The electrolyte infiltrates the electrode assembly 52. The secondary battery 5 may include one or more electrode assemblies 52 whose quantity is adjustable as required.

The preparation method of the secondary battery in this application is well known. In some embodiments, a positive electrode plate, a separator, a negative electrode plate, and an electrolyte may be assembled into a secondary battery. For example, the positive electrode plate, the separator, and the negative electrode plate may be made into an electrode assembly through winding and/or lamination; and the electrode assembly is put into an outer package which is filled with the electrolyte after drying, followed by processes such as vacuum packaging, standing, formation, and shaping, to obtain a secondary battery.

In some embodiments of this application, such secondary batteries of this application may be assembled into a battery module. The battery module may include a plurality of secondary batteries, and a specific quantity may be adjusted based on application and capacity of the battery module.

FIG. 3 is a schematic diagram of a battery module 4 as an example. As shown in FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fastened by using fasteners.

Optionally, the battery module 4 may further include an enclosure with an accommodating space, and the plurality of secondary batteries 5 are accommodated in the accommodating space.

In some embodiments, such battery modules may be further assembled into a battery pack, and a quantity of the battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

## Electric apparatus

According to a fourth aspect, an embodiment of this application provides an electric apparatus. The electric apparatus includes at least one of the secondary battery, battery module, or battery pack according to this application. The secondary battery, the battery module, or the battery pack may be used as a power source for the electric apparatus or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, or an energy storage system.

The secondary battery, the battery module, or the battery pack may be selected for the electric apparatus based

on requirements for using the electric apparatus.

FIG. 6 is a schematic diagram of an electric apparatus as an example. The electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as its power source.

## Examples

Examples below describe in more detail the content disclosed in this application, and these embodiments are merely used for explanatory description. It is apparent for persons skilled in the art to make various modifications and variations within the scope of the content disclosed in this application. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Preparation of organosilicon particles

### Example A

Preparation of prepolymer

1400 g of deionized water and 7 g of sodium dodecyl sulfate were added into a 5-L three-neck flask, stirred and emulsified at a speed of 1500 r/min for 30 min to obtain a uniform and stable emulsion; then, n-butyl acrylate, acrylonitrile, and methacryloxypropyl cage polysilsesquioxane (a molar percentage of n-butyl acrylate, acrylonitrile, and methacryloxypropyl cage polysilsesquioxane is 15:3:2) were sequentially added; and the resulting mixture was stirred still at the speed of 1500 r/min for 30 min to obtain a uniform prepolymer.

Preparation of organosilicon particles

3 g of an emulsifier and 1000 g of deionized water were added into a dry three-neck flask, stirred and emulsified at a high speed for 30 min to obtain a uniform and stable emulsion; then, a peristaltic pump was used to slowly dropwise add the prepolymer prepared in the previous step and an initiator solution (3 g of an initiator potassium persulfate was dissolved in 30 g of deionized water to form the solution); after the dropwise addition, the resulting mixture was heated to 90°C, and the temperature was maintained for reaction for 0.5 h; and then the resulting mixture was cooled to 40°C, adjusted to a pH of 7 to 8 with ammonia water, filtered, and dried to obtain organosilicon particles.

### Example 1

Preparation of separator

A PE substrate was provided, with a thickness of 7 μm, a porosity of 40%, an ionic conductivity of 1.20 mS/cm, and an average particle size of 0.3 μm.

Preparation of a coating slurry: The organosilicon particles prepared in Example A, a water-soluble binder polyacrylic acid, and an additive were mixed to uniformity at a mass ratio of 92:7:1 in an appropriate amount of solvent deionized water to obtain a coating slurry.

Coating: The prepared coating slurry was applied onto both surfaces of the PE substrate using a coater, followed by drying and slitting processes to obtain a separator. The coating on each side of the PE substrate had a surface density of 0.9 $g/m^2$ and a thickness of 0.45 μm.

Preparation of positive electrode plate

An aluminum foil with a thickness of 12 μm was used as the positive electrode current collector.

A positive electrode active material $LiNi_{1/3}Co_{1/3}Mn_{1/3}O_2$ (NCM333), a conductive agent carbon black (Super P), and a binder polyvinylidene fluoride (PVDF) were mixed to uniformity at a mass ratio of 96.2:2.7:1.1 in an appropriate amount of solvent N-methylpyrrolidone (NMP) to obtain a positive electrode slurry; and the positive electrode slurry was applied onto the aluminum foil positive electrode current collector, followed by drying, cold pressing, slitting, and cutting

processes to obtain a positive electrode plate. The positive electrode plate had a surface density of 0.207 $mg/mm^2$ and a compacted density of 3.5 $g/cm^3$.

Preparation of negative electrode plate

A copper foil with a thickness of 8 $\mu$m was used as the negative electrode current collector.

Natural graphite as the negative electrode active material was well mixed with a conductive agent Super P, a thickener CMC, and a binder styrene-butadiene rubber (SBR) in deionized water to obtain a negative electrode slurry. A solid content of the negative electrode slurry was 30wt%, and a mass ratio of the graphite, Super P, CMC, and binder styrene-butadiene rubber (SBR) in solid components was 80:15:3:2. The negative electrode slurry was applied onto the copper foil current collector, dried at 85°C, followed by cold pressing, edge trimming, cutting, and slitting, and then dried in vacuum at 120°C for 12 h to obtain a negative electrode plate.

Preparation of electrolyte

In an environment with a moisture content of less than 10 ppm, nonaqueous organic solvents ethylene carbonate (EC) and diethyl carbonate (DMC) were mixed at a volume ratio of 1:1 to obtain an electrolyte solvent; and subsequently a lithium salt was mixed with the solvent obtained after mixing, to prepare an electrolyte with a lithium salt concentration of 1 mol/L.

Preparation of secondary battery

The positive electrode plate, the separator, and the negative electrode plate were stacked in sequence and wound to obtain an electrode assembly; and the electrode assembly was put into an outer package and dried; and then the electrolyte was injected, followed by processes such as vacuum packaging, standing, formation, and shaping to obtain a secondary battery.

**Comparative example 1 and Examples 2 to 12**

Secondary batteries were prepared using a method similar to that in Example 1 except the preparation parameters of the separator. Detailed parameters are given in Table 1.

The test results are shown in table 1.

**Tests**

1. Thermal shrinkage rate test for separator

Sample preparation: The separator prepared above was punched into samples with a width of 50 mm and a length of 100 mm using a punching machine along a TD direction and an MD direction, 5 parallel samples were replaced on an A4 paper, and then the A4 paper with the samples was placed on corrugated paper with a thickness of 1 mm to 5 mm.

Sample testing: A temperature of a blast oven was set to 150°C; after the temperature reached the set temperature and stabilized for 30 min, the A4 paper with the samples on the corrugated paper was replaced into the blast oven, and timing was started; and after a set time (1 h in this application), length and width of the separator were measured, with values denoted as a and b.

Calculation of thermal shrinkage rate: machine direction (MD) thermal shrinkage rate = $[(100 - a)/100] \times 100\%$, transverse direction (TD) thermal shrinkage rate = $[(50 - b)/50] \times 100\%$, and average values of 5 parallel samples were taken as the test result.

2. Hot-box test for secondary battery

At 25°C, each secondary battery was charged to 4.2 V at a constant current of 1C, continued to be constant-voltage charged to a current $\leq$ 0.05C, and left for standing for 5 min. Then, each secondary battery was tested with a fixture in a DHG-9070A DHG series high-temperature oven and heated from room temperature to $80 \pm 2$°C at a temperature rise rate of 5°C/min; the temperature was maintained for 30 min; after that, the secondary battery was heated again at the temperature rise rate of 5°C/min; and the temperature was maintained for 30 min for every temperature rise of 5°C until the secondary battery fails. During the temperature rise, surface temperature changes of the secondary battery were monitored. When the temperature started to rise sharply, a corresponding oven temperature was a hot-box failure temperature of the secondary battery. A higher hot-box failure temperature of the secondary battery indicates better

thermal safety performance of the secondary battery.

**Table 1**

| No. | Separator | | | | | | | | | Lithium-ion battery |
|---|---|---|---|---|---|---|---|---|---|---|
| | Organosilicon particles | | | | | Coating | 150°C/1h thermal shrinkage rate (%) | | Air permeability (s/100mL) | Hot-box failure temperature (°C) |
| | $D_v90$ (μm) | $D_v10$ (μm) | $D_v50$ (μm) | $(D_v90-D_v10)/D_v50$ | SSA ($cm^2/g$) | Thickness (μm) | MD | TD | | |
| Example 1 | 0.50 | 0.20 | 0.4 | 0.75 | 20.3 | 3.0 | 0.14 | 0.31 | 174 | 160 |
| Example 2 | 1.00 | 0.50 | 0.7 | 0.71 | 16.5 | 3.0 | 0.20 | 0.30 | 160 | 155 |
| Example 3 | 1.50 | 0.70 | 1.0 | 0.80 | 13.4 | 3.0 | 0.29 | 0.31 | 158 | 140 |
| Example 4 | 2.00 | 1.00 | 1.5 | 0.67 | 10.2 | 3.0 | 1.00 | 0.90 | 150 | 135 |
| Example 5 | 3.00 | 1.60 | 1.8 | 0.78 | 8.6 | 3.0 | 2.50 | 2.50 | 144 | 125 |
| Example 6 | 0.78 | 0.65 | 0.7 | 0.19 | 14.0 | 2.0 | 0.50 | 0.44 | 166 | 140 |
| Example 7 | 0.92 | 0.55 | 0.7 | 0.53 | 13.4 | 2.0 | 0.20 | 0.30 | 154 | 155 |
| Example 8 | 1.05 | 0.50 | 0.7 | 0.79 | 13.0 | 2.0 | 0.85 | 0.93 | 160 | 130 |
| Example 9 | 1.00 | 0.50 | 0.7 | 0.71 | 13.7 | 0.5 | 5.60 | 5.30 | 146 | 125 |
| Example 10 | 1.00 | 0.50 | 0.7 | 0.71 | 13.7 | 2.0 | 0.20 | 0.30 | 158 | 145 |
| Example 11 | 1.00 | 0.50 | 0.7 | 0.71 | 13.7 | 3.0 | 0.20 | 0.30 | 160 | 155 |
| Example 12 | 1.00 | 0.50 | 0.7 | 0.71 | 13.7 | 4.0 | 0.14 | 0.09 | 180 | 160 |
| Comparative example 1 | 3.50 | 1.80 | 2.2 | 0.77 | 6.1 | 3.0 | 10.00 | 9.50 | 140 | 120 |

As shown in Table 1, in Comparative example 1, the $D_v90$ of the organosilicon particles is 3.50 $\mu$m, and the separator using organosilicon particles with this particle size has a high thermal shrinkage rate, resulting in poor stability during long-term cycling of the lithium-ion battery. The $D_v90$ of the organosilicon particles is closely related to the minimum coating thickness of the coating of the separator. The maximum thickness is generally less than $D_v90$; otherwise, it is prone to incomplete coating. When the coating thickness is constant, a smaller $D_v90$ indicates more layers of particles stacked in the coating and accordingly better heat resistance.

In Examples 1 to 12, by controlling the $D_v90$ of the organosilicon particles to satisfy $0 < D_v90 \leq 3.0$ $\mu$m, especially when 0.1 $\mu$m $\leq D_v90 \leq$ 2.0 $\mu$m, the thermal shrinkage rate of the separator can be reduced and the mechanical properties of the separator can be improved while the separator has a relatively thin coating. Additionally, the separator has good air permeability, which is conducive to the migration of active ions. Furthermore, in the embodiments, $(D_v90\text{-}D_v10)/D_v50$ is adjusted, so that the mechanical properties and air permeability of the separator can be further improved. In addition, as the coating thickness increases, more organosilicon particles are stacked, improving the heat resistance of the separator, but the air permeability may decrease to some extent.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to specific embodiments disclosed herein and include all technical solutions falling within the scope of the claims.

## Claims

1. A separator, comprising a substrate and a coating disposed on at least one surface of the substrate, wherein the coating comprises organosilicon particles, a particle size by volume $D_v90$ of the organosilicon particles satisfying $0 < D_v90 \leq 3.0$ $\mu$m.

2. The separator according to claim 1, wherein 0.1 $\mu$m $\leq D_v90 \leq$ 2.0 $\mu$m.

3. The separator according to claim 1 or 2, wherein a particle size distribution of the organosilicon particles satisfies $(D_v90\text{-}D_v10)/D_v50 \leq 2.0$; and
optionally, $0.1 \leq (D_v90\text{-}D_v10)/D_v50 \leq 1.0$.

4. The separator according to any one of claims 1 to 3, wherein a particle size by volume $D_v50$ of the organosilicon particles satisfies 0.01 $\mu$m $\leq D_v50 <$ 2 $\mu$m.

5. The separator according to any one of claims 1 to 4, wherein the separator further satisfies at least one of conditions (1) to (3):

   (1) a specific surface area SSA of the organosilicon particles is 2.0 $cm^2/g$ to 50 $cm^2/g$, optionally 8.5 $cm^2/g$ to 20.5 $cm^2/g$;
   (2) the organosilicon particles comprise primary particles; and
   (3) the organosilicon particles have at least one of spherical, spheroidal, cubic, rhombohedral, fibrous, tubular, rod-like, and flaky morphologies.

6. The separator according to any one of claims 1 to 5, wherein the organosilicon particle comprises a first polymer;

   the first polymer comprises a first structural unit, a second structural unit, and a third structural unit; wherein the first structural unit comprises a structural unit represented by formula (I):

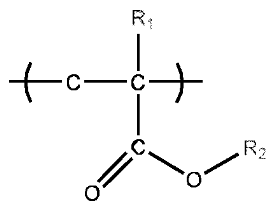
formula (I);

   in formula (I), $R_1$ comprises one or more of hydrogen atom and substituted or unsubstituted C1-C5 alkyl; and

optionally, $R_1$ comprises one or more of hydrogen atom and substituted or unsubstituted C1-C3 alkyl;
$R_2$ comprises one or more of substituted or unsubstituted C1-C20 alkyl, substituted or unsubstituted C3-C20 cycloalkyl, and substituted or unsubstituted C1-C20 hydroxyalkyl, and optionally $R_2$ comprises one or more of C1-C12 alkyl, C3-C12 cycloalkyl, and C1-C12 hydroxyalkyl;
the second structural unit comprises a structural unit represented by formula (II):

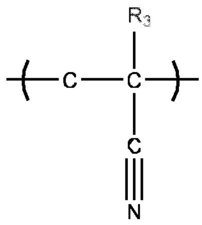
formula (II);

in formula (II), $R_3$ comprises one or more of hydrogen atom and substituted or unsubstituted C1-C5 alkyl, and optionally $R_3$ comprises one or more of hydrogen atom and substituted or unsubstituted C1-C3 alkyl; and
the third structural unit comprises a structural unit represented by formula (III):

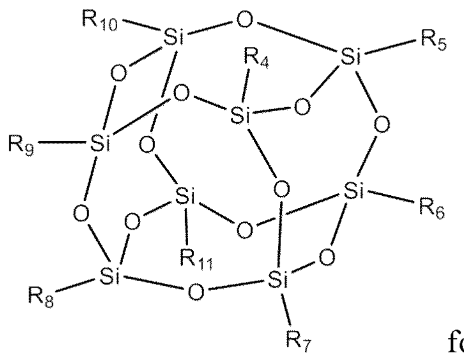
formula (III);

in formula (III), $R_4$ to $R_{11}$ each independently comprise one or more of substituted or unsubstituted C1-C10 alkyl and a structural unit represented by formula (III-1), and at least one of $R_4$ to $R_{11}$ comprises a structural unit represented by formula (III-1):

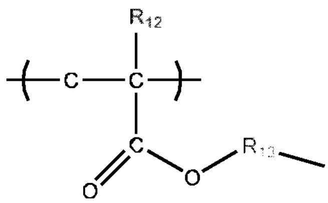
formula (III-1);

in formula (III-1), $R_{12}$ comprises one or more of hydrogen atom and substituted or unsubstituted C1-C5 alkyl; and optionally, $R_{12}$ comprises one or more of hydrogen atom and substituted or unsubstituted C1-C3 alkyl; and $R_{13}$ **comprises** substituted or unsubstituted C1-C10 alkyl; and optionally, $R_{13}$ comprises substituted or unsubstituted C3-C10 alkyl.

**7.** The polymer according to claim 6, wherein

based on a total molar amount of the first structural unit, the second structural unit, and the third structural unit, a molar percentage of the first structural unit is denoted as A%, wherein 75 ≤ A< 100, optionally, 75 ≤ A ≤ 80; and/or
based on the total molar amount of the first structural unit, the second structural unit, and the third structural unit, a molar percentage of the second structural unit is denoted as B%, wherein 0 < B ≤ 15, optionally, 5 ≤ B ≤ 15; and/or
based on the total molar amount of the first structural unit, the second structural unit, and the third structural unit, a molar percentage of the third structural unit is denoted as C%, wherein 0 < C ≤ 15, optionally, 5 ≤ C ≤ 15.

**8.** The polymer according to claim 6 or 7, wherein based on a total molar amount of the first structural unit, the second structural unit, the second

structural unit, and the third structural unit, a molar percentage of the first structural unit is denoted as A%, a molar percentage of the second structural unit is denoted as B%, and a molar percentage of the third structural unit is denoted as C%; and the first polymer satisfies one or more of conditions (1) to (3):

$$(1)\ 5 \leq A/B \leq 15;$$

$$(2)\ 5 \leq A/C \leq 15;$$

and

$$(3)\ A{:}B{:}C \text{ is } (12 \text{ to } 15){:}(1 \text{ to } 3){:}(1 \text{ to } 3).$$

**9.** The separator according to any one of claims 1 to 8, wherein the organosilicon particle comprises a second polymer, and the second polymer comprises a structural unit represented by formula (a):

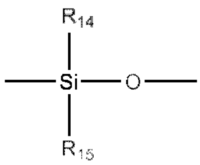
formula (a);

wherein in formula (a), $R_{14}$ and $R_{15}$ each independently comprise one or more of substituted or unsubstituted C1-C10 alkyl, hydroxy, or amino; optionally, $R_{14}$ and $R_{15}$ each independently comprise one or more of substituted or unsubstituted C1-C6 alkyl, hydroxy, or amino; and
optionally, the second polymer comprises one or more of polymethylsiloxane, polydimethylsiloxane, polydiethylsiloxane, polymethylhydroxysiloxane, and polymethylaminosiloxane.

**10.** The separator according to any one of claims 1 to 9, wherein a number average molecular weight of the organosilicon particles is 22000 to 79000, optionally 24000 to 48000.

**11.** The separator according to any one of claims 1 to 10, wherein based on mass of the organosilicon particles, a moisture content of the organosilicon particles is less than or equal to 3500 μg/g; optionally 500 μg/g to 3000 μg/g.

**12.** The separator according to any one of claims 1 to 11, wherein based on mass of the coating, a mass percentage of the organosilicon particles is m1%, wherein $50 \leq ml < 100$, optionally $80 \leq ml \leq 95$.

**13.** The separator according to any one of claims 1 to 12, wherein the coating further comprises inorganic particles; and optionally, a mass percentage of the inorganic particles in the coating is m2%, wherein $0 < m2 \leq 30$.

**14.** The separator according to any one of claims 1 to 13, wherein the separator further satisfies at least one of conditions (a) to (c):

(a) porosity of the substrate is greater than or equal to 25%, optionally 28% to 41%;
(b) thickness of the substrate is less than or equal to 16 μm, optionally 3 μm to 12 μm; and
(c) thickness of the coating is 0.1 μm to 4 μm, optionally 0.5 μm to 3 μm.

**15.** The separator according to any one of claims 1 to 14, wherein the separator further satisfies at least one of the following conditions (I) to (VII):

(I) a machine-direction thermal shrinkage rate $\eta 1$ of the separator at 150°C for 1 hour is ≤ 3.0%;
(II) a transverse-direction thermal shrinkage rate $\eta 2$ of the separator at 150°C for 1 hour is ≤ 2.0%;
(III) a machine-direction tensile strength $R_{m1}$ of the separator is ≥ 2700 kgf/cm$^2$, optionally 2700 kg/cm$^2$ ≤ $R_{m1}$ ≤ 4500 kg/cm$^2$;
(IV) a transverse-direction tensile strength $R_{m2}$ of the separator is ≥ 2000 kgf/cm$^2$, optionally 2500 kg/cm$^2$ ≤ $R_{m2}$ ≤ 4500 kg/cm$^2$;

(V) an infiltrated length L of the separator is ≥ 30 mm, optionally 30 mm ≤ L ≤ 60 mm;
(VI) an infiltrated velocity u of the separator is ≥ 2 mm/s, optionally 2 mm/s ≤ u ≤ 4 mm/s; and
(VII) an air permeability MAP of the separator is ≤ 300 s/100mL, optionally 130 secs/100mL ≤ MAP ≤ 250 secs/100mL.

**16.** A preparation method of a separator, comprising:

S1, providing a substrate;
S2, mixing organosilicon particles in a solvent to prepare a coating slurry; and
S3, applying the coating slurry onto at least one surface of the substrate to form a coating, and performing drying to obtain a separator;
wherein a particle size by volume $D_v90$ of the organosilicon particles satisfies $0 < D_v90 \leq 3.0$ μm.

**17.** The preparation method according to claim 16, wherein based on mass of the coating, a mass percentage of the organosilicon particles is greater than or equal to 50%, optionally 80% to 95%; and/or
a solid content of the coating slurry is 10% to 40%, optionally 20% to 30%.

**18.** A secondary battery, comprising the separator according to any one of claims 1 to 15 or a separator prepared using the preparation method according to claim 16 or 17.

**19.** An electrical apparatus, comprising the secondary battery according to claim 18.

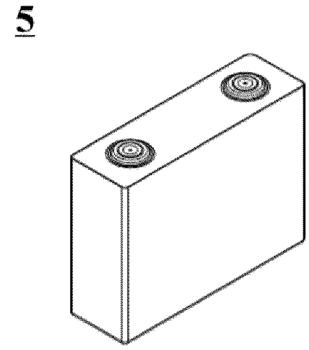


FIG. 1

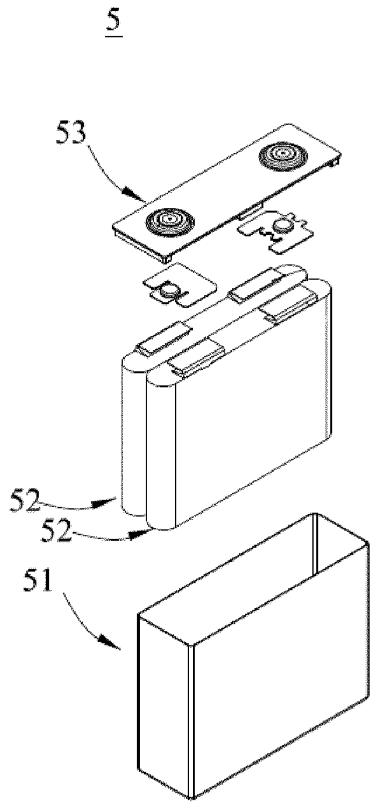


FIG. 2

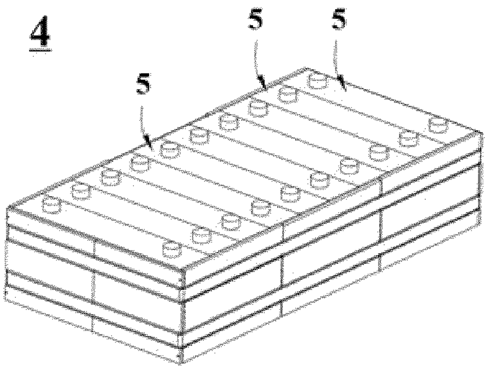


FIG. 3

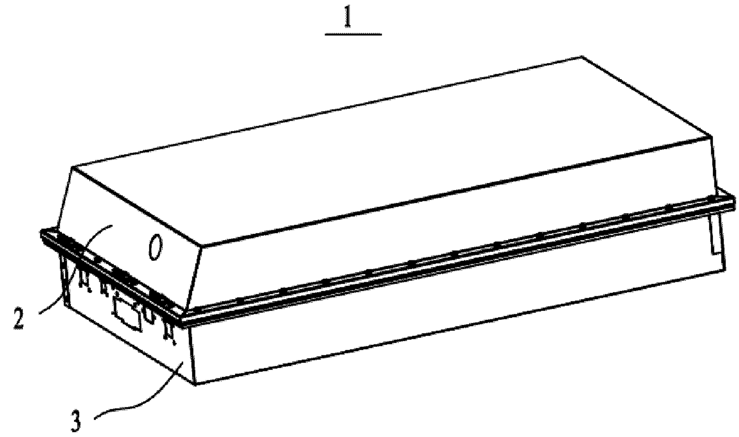


FIG. 4

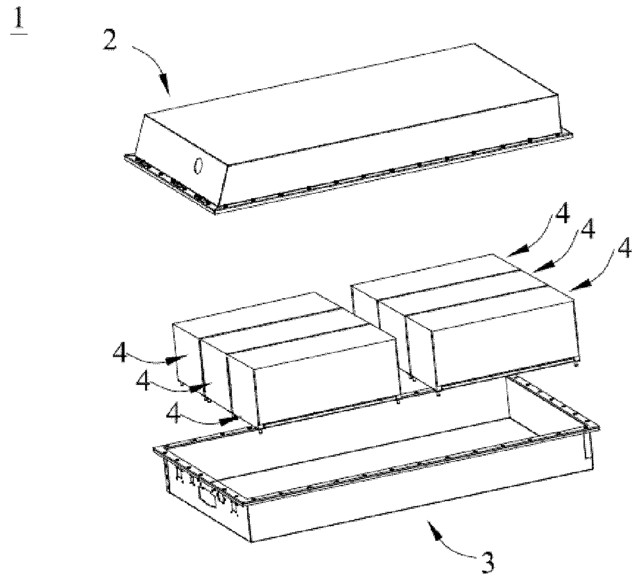


FIG. 5

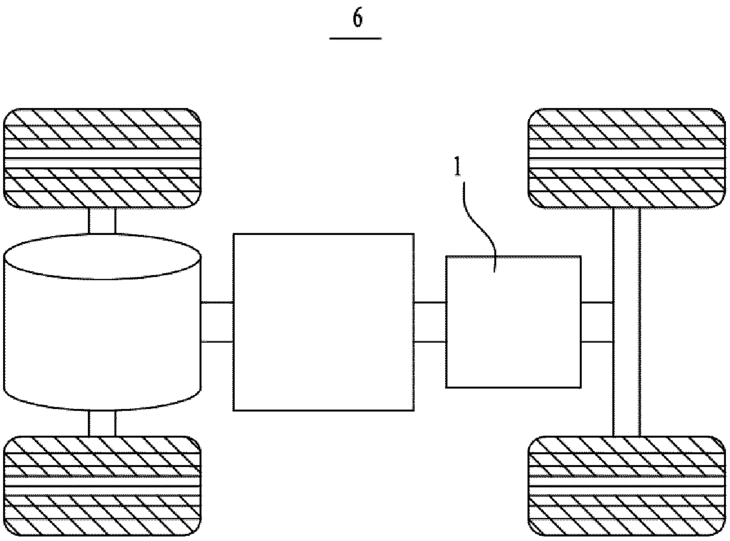


FIG. 6

**INTERNATIONAL SEARCH REPORT**

International application No.
**PCT/CN2022/136428**

**A. CLASSIFICATION OF SUBJECT MATTER**

H01M50/409(2021.01)i; H01M50/40(2021.01)i; H01M50/403(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 隔膜, 隔离膜, 涂层, 有机硅, 粒径, DV90, D90, battery, separator, diaphragm, coating, organic silicon, particle size

**C. DOCUMENTS CONSIDERED TO BE RELEVANT**

| Category* | Citation of document, with indication, where appropriate, of the relevant passages | Relevant to claim No. |
|---|---|---|
| X | CN 112038548 A (LI HUA) 04 December 2020 (2020-12-04)<br>description, paragraphs 6-131, and figures 1 and 3 | 1-5, 9-19 |
| X | JP 2010176936 A (TEIJIN LTD.) 12 August 2010 (2010-08-12)<br>description, paragraphs 2 and 7-53 | 1-5, 9-19 |
| A | CN 102898573 A (ZHEJIANG UNIVERSITY OF TECHNOLOGY) 30 January 2013 (2013-01-30)<br>description, paragraphs 7-53 | 1-19 |
| A | CN 104362280 A (TIANGONG UNIVERSITY) 18 February 2015 (2015-02-18)<br>entire document | 1-19 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 August 2023** | **22 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/136428**

| Patent document cited in search report | | | Publication date (day/month/year) | Patent family member(s) | | | Publication date (day/month/year) |
|---|---|---|---|---|---|---|---|
| CN | 112038548 | A | 04 December 2020 | CN | 112038548 | B | 14 July 2023 |
| JP | 2010176936 | A | 12 August 2010 | | None | | |
| CN | 102898573 | A | 30 January 2013 | CN | 102898573 | B | 12 November 2014 |
| CN | 104362280 | A | 18 February 2015 | | None | | |

Form PCT/ISA/210 (patent family annex) (July 2022)